# EUROPEAN PATENT SPECIFICATION

(11) **EP 4 032 599 B1**
(45) Date of publication and mention of the grant of the patent: **17.01.2024**
(21) Application number: 20892560.2
(22) Date of filing: 26.10.2020
(51) Int. Cl.: B01D 53/26, B01D 53/62, B01D 53/78, C01B 32/50, B01D 3/14, B01D 53/14

(54) **WATER REMOVING DEVICE, WATER REMOVING COMPRESSION SYSTEM, CO2 RECOVERY SYSTEM, AND METHOD FOR CONTROLLING WATER REMOVING DEVICE**
VORRICHTUNG ZUR ENTFERNUNG VON WASSER, SYSTEM ZUR ENTFERNUNG VON WASSER, SYSTEM ZUR RÜCKGEWINNUNG VON CO2 UND VERFAHREN ZUR STEUERUNG DER WASSERENTFERNUNGSVORRICHTUNG
DISPOSITIF D'ÉLIMINATION D'EAU, SYSTÈME DE COMPRESSION D'ÉLIMINATION D'EAU, SYSTÈME DE RÉCUPÉRATION DE CO2 ET PROCÉDÉ DE COMMANDE DE DISPOSITIF D'ÉLIMINATION D'EAU

(30) Priority: 26.11.2019 US 201916696107
(43) Date of publication of application: 27.07.2022
(73) Proprietor: MITSUBISHI HEAVY INDUSTRIES, LTD., Chiyoda-ku Tokyo 100-8332 (JP)
(72) Inventor: MIYAMOTO, Osamu, Houston, Texas 77046 (US); INUI, Masayuki, Yokohama-shi, Kanagawa 220-8401 (JP); YONEKAWA, Takahito, Yokohama-shi, Kanagawa 220-8401 (JP)
(74) Representative: Studio Torta S.p.A.
(86) International application number: PCT/JP2020/040033
(87) International publication number: WO 2021/106461

(56) References cited:
- WO-A1-2015/129628
- WO-A1-2019/123969
- JP-A- 2003 260 349
- JP-A- 2007 333 278
- JP-A- 2010 266 155
- US-A1- 2015 238 893

## Description

### Technical Field

The present disclosure relates to a dehydration device for removing moisture from a process gas containing moisture, a dehydration-compression system, a CO₂ recovery system, and a dehydration device control method.

### Background Art

Dehydration and compression systems (for example, US 9,352,273) recover CO₂ from exhaust gas discharged from industrial facilities such as boilers or gas turbines, for example, and dehydrate and compress the same. For effective utilization of the CO₂ dehydrated and compressed by dehydration and compression systems, it is planned to inject it into oil fields using an enhanced oil recovery (EOR) method or store it in the aquifer to take measures against global warming.

Moisture (H₂O) remaining in compressed CO₂ can cause condensation of moisture during transportation via the pipeline or the like. Condensed moisture causes corrosion in pipelines and incidental equipment and machinery, as well as pipeline blockage due to hydrate production. Accordingly, in the dehydration-compression system disclosed in US 9,352,273, moisture is removed from CO₂ by bringing CO₂ containing moisture supplied from a CO₂ recovery device into contact with a dehydration solvent to cause the dehydration solvent to absorb the moisture.

In the dehydration-compression system of US 9,352,273, CO₂ is brought into contact with the dehydration solvent in a contactor to cause the dehydration solvent to absorb moisture, and the dehydration solvent that absorbed moisture is supplied to a still column via a dehydration solvent carrying line. In the still column, moisture is removed from the dehydration solvent by heating the dehydration solvent that absorbed the moisture. The dehydration solvent with moisture removed is supplied again to the contactor. In Patent Document 1, CO₂ compressed by a compressor is supplied to a dehydration device. Thus, in the dehydration device, the inside of the contactor is pressurized by compressed CO₂, and the dehydration solvent is conveyed by that pressure from the contactor to the still column via the dehydration solvent carrying line.

### Summary of Invention

### Technical Problem

However, in the dehydration-compression system of US 9,352,273, at the time of starting up when the compressor is not in operation, if CO₂ not compressed by the compressor is supplied to the contactor, the inside of the contactor is not pressurized by CO₂, so the dehydration solvent is in a state of not being conveyed from the contactor to the still column. In this case, the dehydration-compression system cannot perform the processing of removing moisture from the dehydration solvent, so the CO₂ supplied from the CO₂ recovery device is discharged to the outside without moisture removed. Thus, CO₂ with moisture remaining therein can cause failure such as corrosion in downstream equipment.

The present disclosure has been made in view of these circumstances. An object of the present disclosure is to provide a dehydration device, a dehydration-compression system, and a CO₂ recovery system capable of removing moisture from a process gas using a dehydration solvent to prevent failure such as corrosion from occurring in downstream equipment even when the inside of an absorption unit is not sufficiently pressurized by the process gas, as well as a dehydration device control method.

### Solution to Problem

A dehydration device according to one aspect of the present disclosure is a dehydration device that removes moisture from a process gas that contains the moisture and is compressed by a compressor, the dehydration device including: an absorption unit configured to remove the moisture from the process gas by bringing the process gas into contact with a dehydration solvent to cause the dehydration solvent to absorb the moisture; a first pressure detecting unit configured to detect a pressure inside the absorption unit; a still unit configured to separate the moisture from the dehydration solvent by heating the dehydration solvent that absorbed the moisture at the absorption unit; a carrying line configured to carry the dehydration solvent from the absorption unit to the still unit; a conveying pump disposed in the carrying line and configured to suck in the dehydration solvent conveyed from the absorption unit and eject the dehydration solvent toward the still unit; a first bypass line coupling the carrying line upstream of the conveying pump and the carrying line downstream of the conveying pump; a first on-off valve disposed in the first bypass line; and a control unit configured to control the conveying pump and the first on-off valve; wherein in a case where a pressure detected by the first pressure detecting unit is lower than a first predetermined pressure, the control unit closes the first on-off valve and causes the conveying pump to operate, and in a case where the pressure detected by the first pressure detecting unit is equal to or higher than the first predetermined pressure, the control unit opens the first on-off valve and causes the conveying pump to stop.

A dehydration device control method according to one aspect of the present disclosure is a dehydration device control method that removes moisture from a process gas that contains the moisture and is compressed by a compressor, the dehydration device including an absorption unit configured to remove the moisture from the process gas by bringing the process gas into contact with a dehydration solvent to cause the dehydration solvent to absorb the moisture, a still unit configured to separate the moisture from the dehydration solvent by heating the dehydration solvent that absorbed the moisture at the absorption unit, a carrying line configured to carry the dehydration solvent from the absorption unit to the still unit, a conveying pump disposed in the carrying line and configured to suck in the dehydration solvent conveyed from the absorption unit and eject the dehydration solvent toward the still unit, a first bypass line coupling the carrying line upstream of the conveying pump and the carrying line downstream of the conveying pump, and a first on-off valve disposed in the first bypass line, the method including: a first pressure detecting step of detecting a pressure inside the absorption unit; a first control step of closing the first on-off valve and causing the conveying pump to operate in a case where a pressure detected at the first pressure detecting step is lower than a first predetermined pressure; and a second control step of opening the first on-off valve and causing the conveying pump to stop in a case where the pressure detected at the first pressure detecting step is equal to or higher than the first predetermined pressure.

### Advantageous Effects of Invention

According to the present disclosure, there can be provided a dehydration device, a dehydration-compression system, and a CO₂ recovery system capable of removing moisture from a process gas using a dehydration solvent to prevent failure such as corrosion from occurring in downstream equipment even when the inside of the absorption unit is not sufficiently pressurized by the process gas, as well as a dehydration device control method.

### Brief Description of Drawings

FIG. 1 is a schematic diagram of a CO₂ recovery device.
FIG. 2 is a configuration diagram of a dehydration-compression system according to a first embodiment.
FIG. 3 is a flowchart illustrating processing performed by the dehydration-compression system according to the first embodiment.
FIG. 4 is a flowchart illustrating processing performed by the dehydration-compression system according to the first embodiment.
FIG. 5 is a configuration diagram of a dehydration-compression system according to a second embodiment.
FIG. 6 is a flowchart illustrating processing performed by the dehydration-compression system according to the second embodiment.
FIG. 7 is a flowchart illustrating processing performed by the dehydration-compression system according to the second embodiment.
FIG. 8 is a configuration diagram of a dehydration-compression system according to a third embodiment.
FIG. 9 is a flowchart illustrating processing performed by the dehydration-compression system according to the third embodiment.
FIG. 10 is a flowchart illustrating processing performed by the dehydration-compression system according to the third embodiment.

### Description of Embodiments

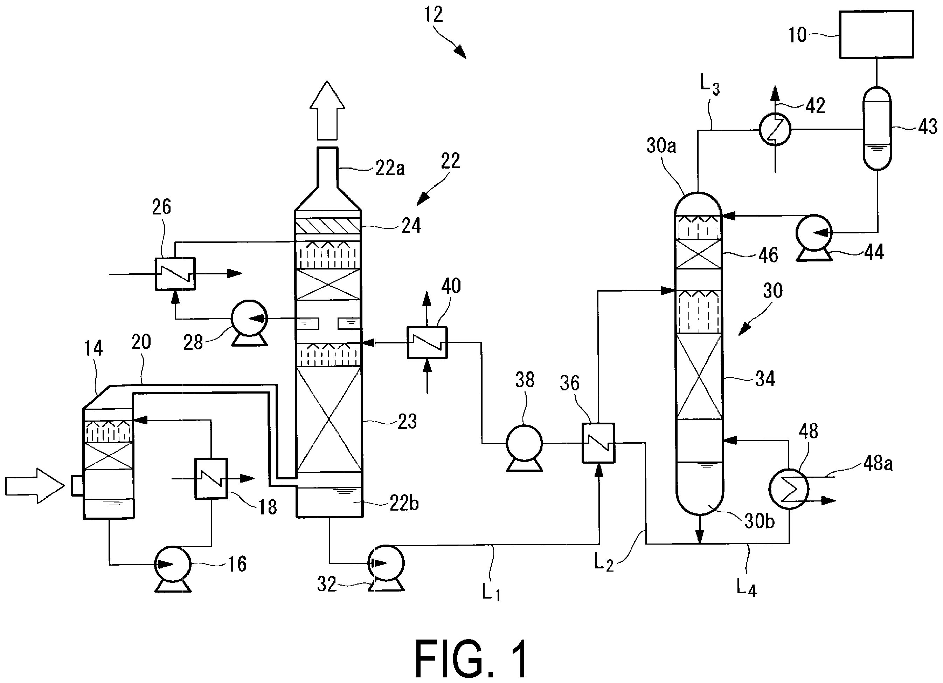

Hereinafter, embodiments of a dehydration-compression system and a CO₂ recovery system according to the present disclosure will be described with reference to the drawings. FIG. 1 is a schematic diagram of a CO₂ recovery device installed in a CO₂ recovery system. A CO₂ recovery device 12 includes a cooling column 14, a CO₂ contactor 22, and an absorbing liquid regeneration column 30.

For example, exhaust gas containing CO₂ discharged from industrial facilities such as boilers or gas turbines is supplied to the cooling column 14 by a blower (not illustrated). The exhaust gas supplied to the cooling column 14 is cooled by cooling water. The cooling water used to cool the exhaust gas is supplied by a pump 16 through a cooler 18 to the cooling column 14 again, and is sprayed into the column.

The cooled exhaust gas containing CO₂ is supplied via an exhaust gas line 20 from a lower portion of the CO₂ contactor 22. In the CO₂ contactor 22, CO₂ absorbing liquid based on, for example, alkanolamines (amine solution) comes into countercurrent contact with the exhaust gas while passing through a filler 23. This causes CO₂ in the exhaust gas to be absorbed by the CO₂ absorbing liquid, and causes CO₂ to be removed from the exhaust gas discharged from industrial facilities. Cleaned gas with CO₂ removed is discharged from a column top 22a of the CO₂ contactor 22.

The cleaned gas contains water vapor and the like. A mist eliminator 24 is provided at an upper portion of the CO₂ contactor 22 to condense the water vapor and the like and separate and remove the same from the cleaned gas. The CO₂ contactor 22 is also provided with a cooler 26 externally attached to the CO₂ contactor 22, and a pump 28 that circulates part of the condensed water between the CO₂ contactor 22 and the cooler 26. The condensed water and the like cooled in the cooler 26 and supplied to an upper portion of the CO₂ contactor 22 maintain the mist eliminator 24 at low temperature, so the cleaned gas passing through the mist eliminator 24 is more reliably cooled.

The CO₂ absorbing liquid that absorbed CO₂ in the CO₂ contactor 22 is stored in a column bottom 22b, supplied from a liquid feed line L₁ connecting the column bottom 22b of the CO₂ contactor 22 and an upper portion of the absorbing liquid regeneration column 30 to the absorbing liquid regeneration column 30 by a pump 32, and sprayed toward a filler 34 in the column. Between the CO₂ contactor 22 and the absorbing liquid regeneration column 30, there is also provided a liquid feed line L₂ connecting a column bottom 30b of the absorbing liquid regeneration column 30 and an upper portion of the CO₂ contactor 22. Moreover, a heat exchanger 36 is provided that exchanges heat between a rich solution (CO₂ absorbing liquid that absorbed CO₂) and a lean solution (CO₂ absorbing liquid with CO₂ removed) at the intersection between the liquid feed line L₁ and the liquid feed line L₂. The rich solution is heated and the lean solution is cooled at the heat exchanger 36.

The CO₂ absorbing liquid that absorbed CO₂ (rich solution) releases CO₂ due to the endothermic reaction caused by countercurrent contact while passing through the filler 34 in the absorbing liquid regeneration column 30. The rich solution has a majority of CO₂ removed around the time the rich solution reaches the column bottom 30b of the absorbing liquid regeneration column 30, and is regenerated as lean solution. The regenerated lean solution is supplied again via a lean solution cooling device (not illustrated) to the CO₂ contactor 22 by a pump 38 as CO₂ absorbing liquid, and reused.

The lean solution that is regenerated by releasing CO₂ in the absorbing liquid regeneration column 30 is refluxed through the liquid feed line L₂ to the CO₂ contactor 22 by the pump 38. While being refluxed, the lean solution is cooled in the heat exchanger 36 by heat exchange with the absorbing liquid supplied from the CO₂ contactor 22 to the absorbing liquid regeneration column 30, and is further cooled by a water-cooled cooler 40 to a temperature suitable for absorption of CO₂.

L₃ is a CO₂ discharge line connected to the column top 30a of the absorbing liquid regeneration column 30. The CO₂ discharged from the absorbing liquid regeneration column 30 via the CO₂ discharge line L₃ is cooled through a cooler 42 using cooling water, and supplied to a scrubber 43. The CO₂ supplied to the scrubber 43 is separated from water vapor. The CO₂ after separation is supplied to a dehydration-compression system 10. The condensed water separated in the scrubber 43 is refluxed by the pump 44 to an upper portion of the absorbing liquid regeneration column 30. The refluxed condensed water cools a condenser 46, and suppresses the release of the CO₂ absorbing liquid or the like.

Furthermore, part of the CO₂ absorbing liquid stored in the column bottom 30b of the absorbing liquid regeneration column 30 is supplied through a circulation path L₄ to a reboiler 48, and heated by heat exchange with high-temperature steam flowing through a steam tube 48a before being refluxed into the absorbing liquid regeneration column 30. This heating causes CO₂ to be released from the CO₂ absorbing liquid of the column bottom 30b, and also causes CO₂ to be released from the CO₂ absorbing liquid during gas-liquid contact in the filler 34 that is indirectly heated.

### First Embodiment

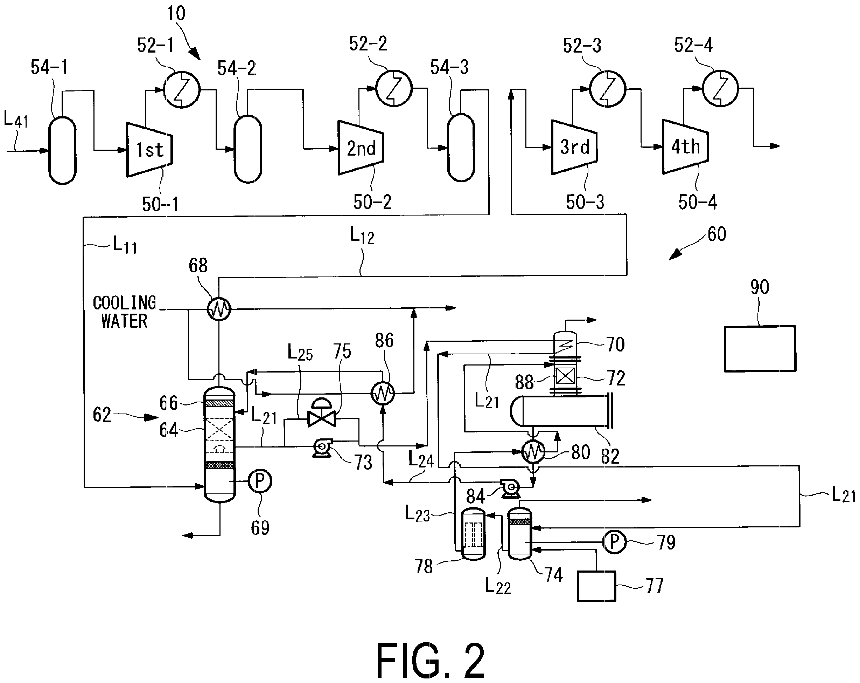

FIG. 2 is a configuration diagram of a dehydration-compression system according to a first embodiment.

The dehydration-compression system 10 includes a plurality of compressors 50 that compress the process gas supplied from the CO₂ recovery device 12. The plurality of compressors 50 are connected in series to the flow of the process gas. This process gas is CO₂ containing H₂O.

The dehydration-compression system 10 of FIG. 2 represents a case in which a dehydration device 60 is installed between adjacent compressors among the plurality of compressors 50. Hereinafter, the present embodiment will be described with compressors on the upstream side of the dehydration device 60 referred to as "front stage-side compressors", and compressors on the downstream side of the dehydration device 60 referred to as "rear stage-side compressors". In the dehydration-compression system 10, four compressors 50-1 to 50-4 are installed. The dehydration device 60 is connected between the compressor 50-2 and the compressor 50-3. The compressors 50-1 and 50-2 constitute front stage-side compressors, and the compressors 50-3 and 50-4 constitute rear stage-side compressors.

However, in the present embodiment, the number of compressors is not limited to four. The installation position of the dehydration device 60 is not limited to that illustrated in FIG. 2 either. For example, the dehydration device 60 may be installed between the compressor 50-1 and the compressor 50-2. Furthermore, the dehydration device 60 may be installed on the upstream side of the plurality of compressors 50 (i.e., on the upstream side of the compressor 50-1), or may be installed on the downstream side of the plurality of compressors 50 (i.e., on the downstream side of the compressor 50-4).

The compressors 50-1 to 50-4 include coolers 52-1 to 52-4, respectively, on the gas downstream side. The coolers 52-1 to 52-4 cool the process gas that was heated by being compressed in the compressors 50-1 to 50-4.

The most upstream compressor 50-1 is connected to a scrubber 54-1 on the upstream side. The scrubber 54-1 removes the H₂O mist entrained in the CO₂ recovered in the CO₂ recovery device 12 from the scrubber 43. Furthermore, scrubbers 54-2 and 54-3 are installed on the downstream side of the coolers 52-1 and 52-2, respectively. The scrubbers 54-2 and 54-3 recover H₂O that is condensed as the saturation ratio of H₂O decreases by compression.

In the present embodiment, the compressor 50-1 and the compressor 50-2 disposed on the upstream side of the dehydration device 60 each include a member that includes an inner peripheral surface coming into contact with the process gas and that is formed from stainless steel. On the other hand, the compressor 50-3 and the compressor 50-4 disposed on the downstream side of the dehydration device 60 each include a member including an inner peripheral surface coming into contact with the process gas formed from carbon steel.

The compressor 50-1 and the compressor 50-2 are formed from stainless steel to increase resistance to corrosion due to moisture, because process gas containing moisture is supplied from the CO₂ recovery device 12. The compressor 50-3 and the compressor 50-4 are formed from carbon steel because they are not affected by corrosion due to moisture, as process gas with moisture removed is supplied from the dehydration device 60.

The dehydration device 60 of the present embodiment includes a contactor (absorption unit) 62, a still column (still unit) 72, a dehydration solvent conveying pump 73, a flash drum (evaporation unit) 74, a reboiler 82, and a dehydration control device (control unit) 90. The contactor 62 is a device that brings CO₂ that is the process gas into contact with the dehydration solvent to cause the dehydration solvent to absorb moisture, and thereby removes moisture from the process gas. The still column 72 is a device that heats the dehydration solvent that absorbed moisture in the contactor 62 to separate moisture from the dehydration solvent.

The CO₂ (process gas) after being compressed at the compressor 50-2 is supplied via a CO₂ supply line L₁₁ into the contactor 62 from a lower portion of the contactor 62. A filler 64 is housed inside the contactor 62. The dehydration solvent is dispersed from above the filler. The dehydration solvent is liquid capable of absorbing H₂O in CO₂. Specifically, the dehydration solvent is triethylene glycol (TEG), diethylene glycol (DEG), or the like. While the dispersed dehydration solvent passes through the filler 64, CO₂ and the dehydration solvent come into countercurrent contact with each other. This causes H₂O in CO₂ to be absorbed by the dehydration solvent. Part of CO₂ (approximately 0.2 to 5%) is also absorbed by the dehydration solvent.

A mist eliminator 66 is installed at an upper portion of the contactor 62. The CO₂ after having H₂O removed (dry CO₂) passes through the mist eliminator 66, and is discharged to a dry CO₂ supply line (dry CO₂ conveying path; discharge line) L₁₂. The dry CO₂ discharged from the contactor 62 is cooled through a cooler 68 provided in the dry CO₂ supply line L₁₂ before being supplied through the dry CO₂ supply line L₁₂ to the rear stage-side compressors 50-3 and 50-4 to be compressed. The CO₂ after being compressed at the rear stage-side compressors 50-3 and 50-4 is utilized, for example, for an enhanced oil recovery (EOR) method.

The dehydration solvent that absorbed H₂O and CO₂ is discharged on the lower side of the filler 64 through a dehydration solvent carrying line L₂₁ from the contactor 62. The dehydration solvent carrying line L₂₁ starts from the contactor 62, passes through the inside of a reflux condenser 70, and is connected to the flash drum 74.

If a pressure Pco inside the contactor 62 is equal to or higher than a first predetermined pressure Ppr1, the dehydration solvent present on the lower side of the filler 64 of the contactor 62 is carried by the difference in pressure between the pressure Pco inside the contactor 62 and a pressure Pfl inside the flash drum 74 to be described later from the contactor 62 to the flash drum 74 via the dehydration solvent carrying line L₂₁. Here, it is assumed that the pressure Pfl inside the flash drum 74 is maintained at a second predetermined pressure Ppr2.

Therefore, if the difference in pressure between the pressure Pco inside the contactor 62 and the pressure Pfl inside the flash drum 74 is equal to or higher than Ppr1 - Ppr2, the dehydration solvent can be carried by the pressure of the process gas itself from the contactor 62 to the flash drum 74 via the dehydration solvent carrying line L₂₁.

The contactor 62 is provided with a pressure sensor (first pressure detecting unit) 69 that detects pressure inside the contactor 62. The pressure sensor 69 detects the pressure inside the contactor 62, and transmits the detected pressure to the dehydration control device 90.

The dehydration solvent conveying pump 73 is disposed in the dehydration solvent carrying line L₂₁ for conveying the dehydration solvent from the contactor 62 to the flash drum 74. The dehydration solvent conveying pump 73 sucks in the dehydration solvent conveyed from the contactor 62 and ejects the dehydration solvent toward the still column 72. The operation of the dehydration solvent conveying pump 73 is controlled by a control signal transmitted from the dehydration control device 90 via a signal line (not illustrated).

The dehydration device 60 includes a bypass line (first bypass line) L₂₅ coupling the dehydration solvent carrying line L₂₁ on the upstream side of the dehydration solvent conveying pump 73 and the dehydration solvent carrying line L₂₁ on the downstream side. The dehydration device 60 includes a first on-off valve 75 disposed in the bypass line (first bypass line) L₂₅. The on-off state of the first on-off valve 75 is controlled by a control signal transmitted from the dehydration control device 90 via a signal line (not illustrated).

The reflux condenser 70 houses the dehydration solvent carrying line L₂₁. As will be described later, high-temperature gas containing CO₂ and H₂O at approximately 100 to 200°C flows in the reflux condenser 70. The dehydration solvent that passes through the dehydration solvent carrying line L₂₁ is warmed by indirect heat exchange with this high-temperature gas containing CO₂ and H₂O. The dehydration solvent after being subjected to heat exchange at the reflux condenser 70 is conveyed via the dehydration solvent carrying line L₂₁ to an upper portion of the flash drum 74.

The flash drum 74 is a device that is disposed between the dehydration solvent carrying line L₂₁ and the dehydration solvent carrying line L₂₂, and that decompresses the dehydration solvent to evaporate the CO₂ and H₂O absorbed by the dehydration solvent. Compressed gas (e.g., compressed nitrogen, compressed air) having a predetermined pressure (e.g., a set pressure within the range of 5 kg/cm² or greater and 10 kg/cm² or less) is supplied from a compressed gas supply source 77 to the flash drum 74.

Note that the pressure of the process gas supplied from the CO₂ recovery device 12 to the dehydration-compression system 10 is lower than the pressure of the compressed gas supplied from the compressed gas supply source 77. The compressed gas supply source 77 supplies, to the flash drum 74, compressed gas having a pressure higher than the pressure of the process gas supplied from the CO₂ recovery device 12 to the dehydration-compression system 10.

The flash drum 74 is provided with a pressure sensor (second pressure detecting unit) 79 that detects the pressure Pfl inside the flash drum 74. The pressure sensor 79 detects the pressure inside the flash drum 74, and transmits the detected pressure to the dehydration control device 90. The dehydration control device 90 controls the supply state of the compressed gas by the compressed gas supply source 77 such that the pressure Pfl detected by the pressure sensor 79 is at the second predetermined pressure Ppr2.

Here, the second predetermined pressure Ppr2 is lower than the first predetermined pressure Ppr1, and is a pressure capable of causing the dehydration solvent present in the flash drum 74 to be carried from the flash drum 74 to the still column 72 via the dehydration solvent carrying line L₂₂ and the dehydration solvent carrying line L₂₃. If the pressure Pfl inside the flash drum 74 is equal to or higher than the second predetermined pressure Ppr2, the dehydration solvent present in the flash drum 74 is carried by the difference in pressure between the pressure Pfl inside the flash drum 74 and a pressure Psc inside the still column 72 from the flash drum 74 to the still column 72 via the dehydration solvent carrying line L₂₂ and the dehydration solvent carrying line L₂₃. Here, it is assumed that the pressure Psc inside the still column 72 is maintained at the atmospheric pressure Pap.

Therefore, if the difference in pressure between the pressure Pfl inside the flash drum 74 and the pressure Psc inside the still column 72 is equal to or higher than Ppr2 - Pap, the dehydration solvent can be carried by the pressure of the process gas itself from the flash drum 74 to the still column 72 via the dehydration solvent carrying line L₂₂ and the dehydration solvent carrying line L23.

The dehydration solvent supplied to the flash drum 74 flashes (evaporates) in the flash drum 74. At this time, a majority (80% to 90%) of CO₂ and a small part of H₂O that have been absorbed are desorbed from the dehydration solvent. This recovers CO₂ from the dehydration solvent. The dehydration solvent is stored at the bottom of the flash drum 74. A minuscule amount (10% to 20%) of CO₂ and H₂O remains absorbed in the dehydration solvent.

The CO₂ and H₂O recovered in the flash drum 74 are discharged from the flash drum 74. The recovered CO₂ and H₂O are, for example, supplied from the flash drum 74 to a process fluid flow path L₄₁ on the gas upstream side of the compressor 50-1. Along with the CO₂ recovered in the CO₂ recovery device 12, the CO₂ recovered in the dehydration device 60 is compressed by the compressors 50-1 and 50-2, and conveyed again to the dehydration device 60. The H₂O recovered in the dehydration device 60 passes through the scrubbers 54-1 to 54-3, and is thereby removed from CO₂. As described above, remaining H₂O is further removed from CO₂ in the contactor 62 of the dehydration device 60.

The dehydration solvent carrying line L₂₂ connects the flash drum 74 and a filter 78. The dehydration solvent is carried from the bottom of the flash drum 74 to the filter 78 via the dehydration solvent carrying line L₂₂. Solids (rust and the like) contained in the dehydration solvent are removed by the filter 78.

The dehydration solvent carrying line L₂₃ connects the filter 78 and the still column 72. The dehydration solvent is discharged from the filter 78, and carried to the still column 72 via the dehydration solvent carrying line L₂₃. A heat exchanger 80 is installed in the middle of the dehydration solvent carrying line L₂₃. At the heat exchanger 80, heat exchange is performed between the dehydration solvent discharged from the filter 78 and the dehydration solvent discharged from the reboiler 82 to be described later. By this heat exchange, the dehydration solvent flowing through the dehydration solvent carrying line L₂₃ is heated to approximately 150°C.

The still column 72 houses a filler 88. The dehydration solvent supplied via the dehydration solvent carrying line L₂₃ is heated in the still column 72. CO₂ and H₂O remaining in the dehydration solvent are released from the dehydration solvent, and separated from the dehydration solvent. The released CO₂ and H₂O pass through a reflux condenser 70, and is discharged from the reflux condenser 70. As described above, while passing through the reflux condenser 70, the released CO₂ and H₂O are utilized for heat exchange with the dehydration solvent flowing through the dehydration solvent carrying line L₂₁.

The dehydration solvent that released CO₂ and H₂O in the still column 72 is conveyed to the reboiler 82 to be heated. A dehydration solvent carrying line L₂₄ connects the reboiler 82 and the contactor 62. The operation of a pump 84 causes the heated dehydration solvent to be discharged from the reboiler 82 via the dehydration solvent carrying line L₂₄. At the heat exchanger 80 in the middle of the dehydration solvent carrying line L₂₄, heat exchange is performed between the dehydration solvent flowing through the dehydration solvent carrying line L₂₃ and the dehydration solvent flowing through the dehydration solvent carrying line L₂₄. The dehydration solvent after being subjected to heat exchange is cooled by a cooler 86 before being circulated to the contactor 62.

Note that the dehydration solvent conveyed to the reboiler 82 contains a minuscule amount of CO₂ and H₂O. Heating the dehydration solvent at the reboiler 82 releases the residual CO₂ and H₂O from the dehydration solvent. The reboiler 82 and the still column 72 are in communication with each other. The CO₂ and H₂O released from the reboiler 82 pass through the still column 72, and are discharged from the reflux condenser 70.

From the viewpoint of the amount of CO₂ recovered in the entire CO₂ recovery system, the CO₂ discharged from the reflux condenser 70 is minuscule. The gas discharged from the reflux condenser 70 is released outside the system of the dehydration device 60. In the present embodiment, the CO₂ generated when regenerating the dehydration solvent in the dehydration device 60 is conveyed to the upstream side of the contactor 62 to be dehydrated again, so the loss amount of CO₂ is reduced.

The dehydration control device 90 is a device that controls each part of the dehydration device 60. As will be described later, the dehydration control device 90 controls the operating state of the dehydration solvent conveying pump 73 and the on-off state of the first on-off valve 75 in accordance with the pressure inside the contactor 62, which is transmitted from the pressure sensor 69.

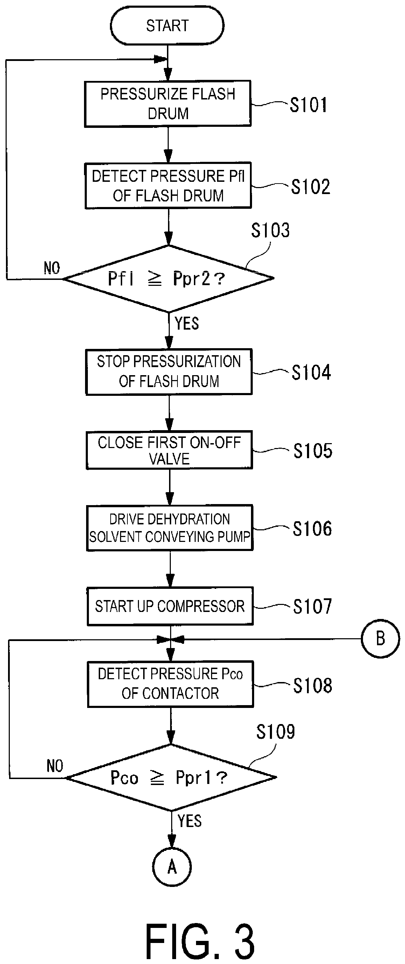

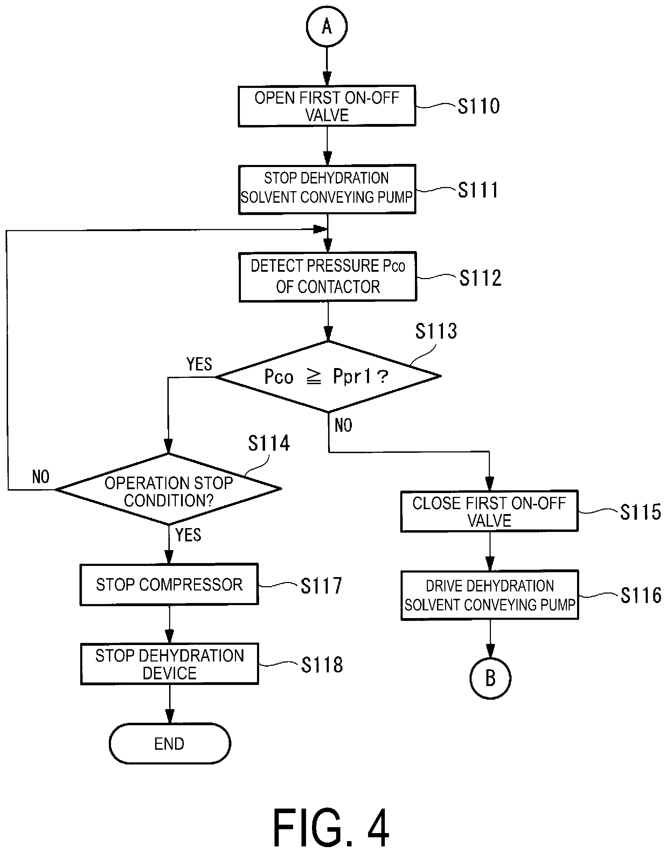

Next, processing performed by the dehydration-compression system 10 of the present embodiment will be described with reference to drawings. FIGS. 3 and 4 are flowcharts illustrating processing performed by the dehydration-compression system 10 according to the present embodiment. Each of the processing illustrated in FIGS. 3 and 4 is performed by the dehydration control device 90 that controls the dehydration device 60, and a compression control device (not illustrated) that controls the plurality of compressors 50.

The processing illustrated in the flowcharts of FIGS. 3 and 4 is the processing performed when the dehydration-compression system 10 starts up. The processing illustrated in the flowcharts of FIGS. 3 and 4 is started when the plurality of compressors 50 and the dehydration device 60 of the dehydration-compression system 10 are in stoppage. When the dehydration-compression system 10 starts up, the plurality of compressors 50 are in stoppage, so the process gas supplied from the CO₂ recovery device 12 has not been compressed by the compressor 50-1 and the compressor 50-2.

When the dehydration-compression system 10 starts up, the process gas supplied to the contactor 62 has not been compressed, and no compressed gas has been supplied to the flash drum 74. Thus, the difference in pressure between the pressure Pco inside the contactor 62 and the pressure Pfl inside the flash drum 74 is not equal to or higher than Ppr1 - Ppr2, so the dehydration solvent cannot be carried by the pressure of the process gas itself from the contactor 62 to the flash drum 74 via the dehydration solvent carrying line L₂₁.

Each of the processing of the flowcharts illustrated in FIGS. 3 and 4 to be described below includes the processing of conveying the dehydration solvent by the dehydration solvent conveying pump 73 when the dehydration solvent cannot be conveyed by the pressure of the process gas itself from the contactor 62 to the flash drum 74.

In step S 101, the dehydration control device 90 controls the supply state of the compressed gas by the compressed gas supply source 77 so as to pressurize the flash drum 74 to the second predetermined pressure Ppr2.

In step S 102, the dehydration control device 90 transmits a control signal for causing the pressure sensor 79 to detect the pressure Pfl inside the flash drum 74. The dehydration control device 90 detects the pressure Pfl transmitted from the pressure sensor 79 in response to the control signal transmitted to the pressure sensor 79.

In step S 103, the dehydration control device 90 determines whether the pressure Pfl transmitted from the pressure sensor 79 is equal to or higher than the second predetermined pressure Ppr2. If YES, the processing proceeds to step S104. If NO, the processing in step S101 is performed again.

In step S 104, the dehydration control device 90 stops supply of the compressed gas from the compressed gas supply source 77 to the flash drum 74, and thereby stops pressurization of the flash drum 74.

In step S 105, so as to close the first on-off valve 75 provided in the bypass line L₂₅, the dehydration control device 90 controls the first on-off valve 75.

In step S 106, the dehydration control device 90 drives the dehydration solvent conveying pump 73 to convey the dehydration solvent from the contactor 62 to the flash drum 74 via the dehydration solvent carrying line L₂₁. The dehydration solvent conveying pump 73 ejects the dehydration solvent supplied from the contactor 62 toward the flash drum 74, and conveys the dehydration solvent via the dehydration solvent carrying line L₂₁.

In step S 106, the dehydration solvent conveying pump 73 is driven, so the dehydration solvent is conveyed from the contactor 62 to the flash drum 74. Furthermore, the pressure inside the flash drum 74 is equal to or higher than the second predetermined pressure Ppr2, so the dehydration solvent is conveyed from the flash drum 74 to the still column 72. Further, the operation of the pump 84 causes the dehydration solvent to be carried to the contactor 62 through the dehydration solvent carrying line L₂₄. In this way, the dehydration solvent is in a state of circulating in the order of the contactor 62, the flash drum 74, the still column 72, and the contactor 62.

In step S 107, the compression control device (not illustrated) starts up all of the plurality of compressors 50, and starts compression of the process gas supplied from the CO₂ recovery device 12. The compressor 50-1 and the compressor 50-2 compress the process gas containing moisture supplied from the CO₂ recovery device 12, and supply the same to the CO₂ supply line L₁₁ of the dehydration device 60. The compressor 50-3 and the compressor 50-4 compress the process gas with moisture removed supplied from the dehydration device 60, and supply the same to downstream equipment.

In step S 108, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S 109, the dehydration control device 90 determines whether the pressure Pco transmitted from the pressure sensor 69 is equal to or higher than the first predetermined pressure Ppr1. If YES, the processing proceeds to step S 110. If NO, the processing in step S 108 is performed again.

In step S110, the dehydration control device 90 transmits a control signal for opening the first on-off valve 75. The first on-off valve 75 is opened in response to the control signal transmitted from the dehydration control device 90. The first on-off valve 75 is opened because the pressure Pco is equal to or higher than the first predetermined pressure Ppr1, and the dehydration solvent can be carried by the pressure of the process gas itself from the contactor 62 to the flash drum 74 via the dehydration solvent carrying line L₂₁.

In step S 111, the dehydration control device 90 transmits a control signal for stopping the dehydration solvent conveying pump 73. The dehydration solvent conveying pump 73 stops the operation of sucking in and ejecting the dehydration solvent in response to the control signal received from the dehydration control device 90.

In step S112, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S113, the dehydration control device 90 determines whether the pressure Pco transmitted from the pressure sensor 69 is equal to or higher than the first predetermined pressure Ppr1. If YES, the processing proceeds to step S 114. If NO, the processing proceeds to step S 115.

In step S114, the dehydration control device 90 and the compression control device determine whether an operation stop condition for stopping the dehydration-compression system 10 is satisfied. If YES, the processing proceeds to step S 117. If NO, the processing in step S 112 is performed again.

In step S 115, so as to close the first on-off valve 75 provided in the bypass line L₂₅, the dehydration control device 90 controls the first on-off valve 75.

In step S116, the dehydration control device 90 drives the dehydration solvent conveying pump 73. Since the pressure Pco inside the contactor 62 falls below the first predetermined pressure Ppr1, the dehydration solvent conveying pump 73 is driven to continue the conveyance of the dehydration solvent from the contactor 62 to the flash drum 74. The dehydration solvent conveying pump 73 ejects the dehydration solvent supplied from the contactor 62 toward the flash drum 74, and conveys the dehydration solvent via the dehydration solvent carrying line L₂₁.

In step S117, since the operation stop condition for stopping the dehydration-compression system 10 is satisfied, the compression control device stops all of the plurality of compressors 50. Stopping the compressors 50 stops the supply of the process gas from the compressors 50 to the CO₂ supply line L₁₁.

In step S118, since the operation stop condition for stopping the dehydration-compression system 10 is satisfied, the dehydration control device 90 stops the dehydration device 60. Each part of the dehydration device 60 stops operation in response to a control signal transmitted from the dehydration control device 90.

As described above, according to the dehydration device 60 of the present embodiment, for example, at the time of starting up when the process gas is supplied without being sufficiently compressed by the compressors 50, if the pressure Pco inside the contactor 62 detected by the pressure sensor 69 is lower than the first predetermined pressure Ppr1, the first on-off valve 75 disposed in the bypass line L₂₅ coupling the upstream side and the downstream side of the dehydration solvent conveying pump 73 is closed, and the dehydration solvent conveying pump 73 operates. Thus, even if the pressure Pco inside the contactor 62 is lower than the first predetermined pressure Ppr1, the dehydration solvent is conveyed from the contactor 62 to the still column 72, which makes it possible to perform the processing of removing moisture from the process gas using the dehydration solvent.

Furthermore, if the pressure Pco inside the contactor 62 detected by the pressure sensor 69 is equal to or higher than the first predetermined pressure Ppr1, the first on-off valve 75 disposed in the bypass line L₂₅ coupling the upstream side and the downstream side of the dehydration solvent conveying pump 73 is opened, and the dehydration solvent conveying pump 73 stops. Thus, if the pressure Pco inside the contactor 62 is equal to or higher than the first predetermined pressure Ppr1, the dehydration solvent is conveyed by the pressure Pco inside the contactor 62 from the contactor 62 to the still column 72 without the dehydration solvent conveying pump 73 being used, which makes it possible to perform the processing of removing moisture from the process gas using the dehydration solvent. In this way, according to the dehydration device 60 according to the present embodiment, it is possible to perform the processing of removing moisture from the process gas using the dehydration solvent to prevent failure such as corrosion from occurring in downstream equipment even when the inside of the contactor 62 is not sufficiently pressurized by the process gas.

### Second Embodiment

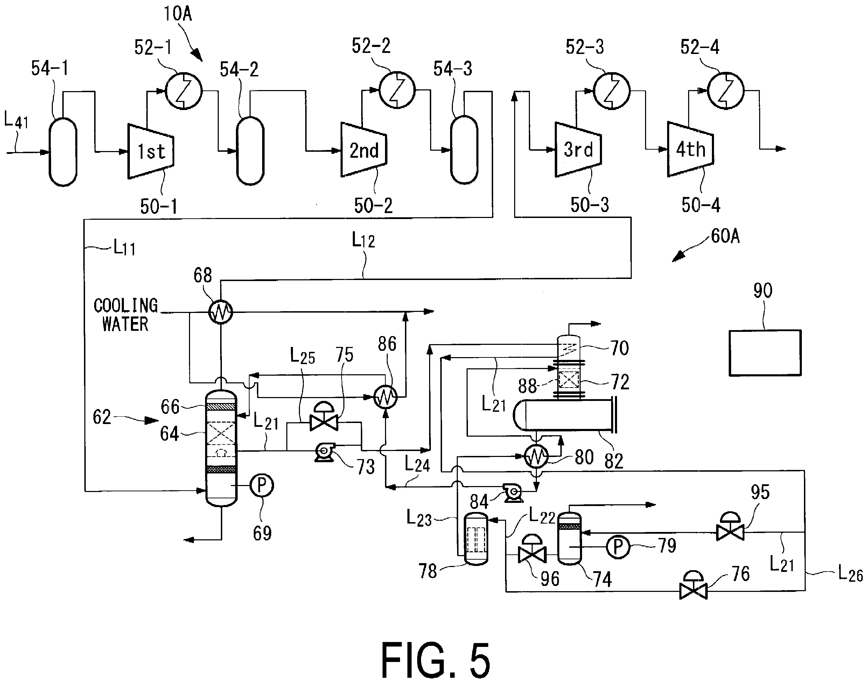

Next, a dehydration-compression system 10A according to a second embodiment of the present disclosure will be described with reference to drawings. FIG. 5 is a configuration diagram of the dehydration-compression system 10A according to the present embodiment. The present embodiment is a modification example of the first embodiment. Unless otherwise described below, the present embodiment is similar to the first embodiment, and description is omitted below.

The dehydration-compression system 10 of the first embodiment supplies compressed gas from the compressed gas supply source 77 to the flash drum 74, and controls such that the pressure Pfl inside the flash drum 74 is equal to or higher than the second predetermined pressure Ppr2. In contrast, the dehydration-compression system 10A of the present embodiment is not provided with the compressed gas supply source 77, and ensures that the dehydration solvent does not pass through the flash drum 74 when the dehydration-compression system 10 starts up.

As illustrated in FIG. 5, a dehydration device 60A of the dehydration-compression system 10A according to the present embodiment includes a bypass line (second bypass line) L₂₆ coupling the dehydration solvent carrying line L₂₁ on the upstream side of the flash drum 74 and the dehydration solvent carrying line L₂₂ on the downstream side of the flash drum 74. The dehydration device 60A includes a second on-off valve 76 disposed in the bypass line L₂₆.

The on-off state of the second on-off valve 76 is controlled by a control signal transmitted by the dehydration control device 90 via a signal line (not illustrated). The second on-off valve 76 is closed when the dehydration solvent supplied from the contactor 62 via the dehydration solvent carrying line L₂₁ is supplied to the flash drum 74, and opened when the dehydration solvent is not supplied to the flash drum 74.

As illustrated in FIG. 5, the dehydration device 60A includes an upstream-side on-off valve 95 disposed in the dehydration solvent carrying line L₂₁ on the upstream side of the flash drum 74, and a downstream-side on-off valve 96 disposed in the dehydration solvent carrying line L₂₂ on the downstream side of the flash drum 74. The upstream-side on-off valve 95 and the downstream-side on-off valve 96 are opened when the dehydration solvent supplied from the contactor 62 via the dehydration solvent carrying line L₂₁ is supplied to the flash drum 74, and closed when the dehydration solvent is not supplied to the flash drum 74.

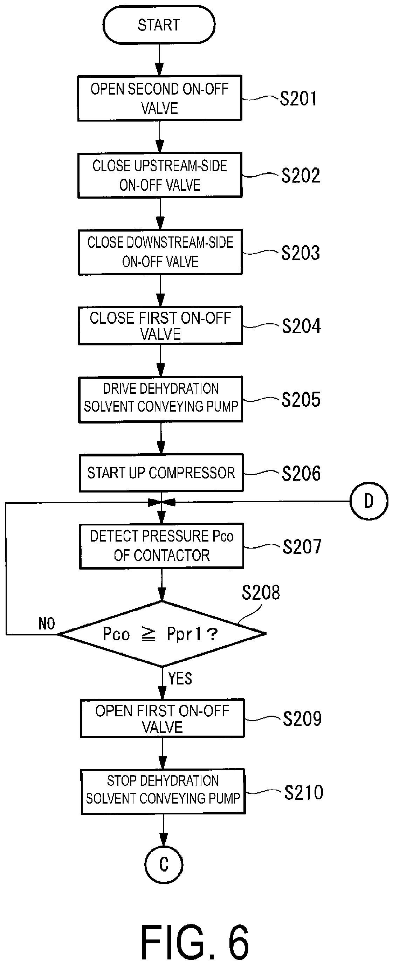

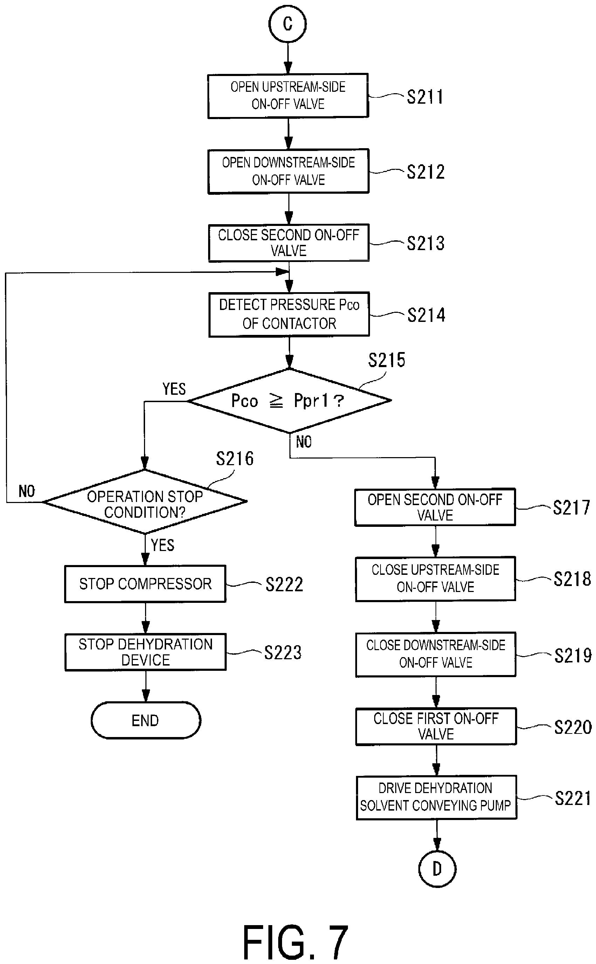

Next, processing performed by the dehydration-compression system 10A of the present embodiment will be described with reference to drawings. FIGS. 6 and 7 are flowcharts illustrating processing performed by the dehydration-compression system 10A according to the present embodiment. Each of the processing illustrated in FIGS. 6 and 7 is performed by the dehydration control device 90 that controls the dehydration device 60A, and a compression control device (not illustrated) that controls the plurality of compressors 50. Similar to the first embodiment, the processing illustrated in the flowcharts of FIGS. 6 and 7 is the processing performed when the dehydration-compression system 10A starts up.

When the dehydration-compression system 10A starts up, the process gas supplied to the contactor 62 has not been compressed, and no compressed gas has been supplied to the flash drum 74. Thus, the difference in pressure with the pressure Pfl inside the flash drum 74 is not equal to or higher than Ppr1 - Ppr2, so the dehydration solvent cannot be carried by the pressure of the process gas itself from the contactor 62 to the flash drum 74 via the dehydration solvent carrying line L₂₁.

When the dehydration-compression system 10 starts up, the dehydration device 60 of the first embodiment supplies the compressed gas from the compressed gas supply source 77 to the flash drum 74 such that the difference in pressure with the pressure Pfl inside the flash drum 74 is equal to or higher than Ppr1 - Ppr2. In contrast, the dehydration device 60A of the present embodiment ensures that the flash drum 74 is not passed through when the dehydration-compression system 10A starts up.

Specifically, in steps S201 to S203 illustrated in FIGS. 6 and 7, the dehydration control device 90 opens the second on-off valve 76 and closes the upstream-side on-off valve 95 and the downstream-side on-off valve 96, so that the dehydration solvent is conveyed from the contactor 62 to the still column 72 via the bypass line L₂₆.

In step S201, so as to open the second on-off valve 76 provided in the bypass line L₂₆, the dehydration control device 90 controls the second on-off valve 76.

In step S202, so as to close the upstream-side on-off valve 95 provided in the dehydration solvent carrying line L₂₁ on the upstream side of the flash drum 74, the dehydration control device 90 controls the upstream-side on-off valve 95.

In step S203, so as to close the downstream-side on-off valve 96 provided in the dehydration solvent carrying line L₂₂ on the downstream side of the flash drum 74, the dehydration control device 90 controls the downstream-side on-off valve 96.

In step S204, so as to close the first on-off valve 75 provided in the bypass line L₂₅, the dehydration control device 90 controls the first on-off valve 75.

In step S205, the dehydration control device 90 drives the dehydration solvent conveying pump 73 to convey the dehydration solvent from the contactor 62 to the still column 72 via the dehydration solvent carrying line L₂₁, the bypass line L₂₅, the bypass line L₂₆, the dehydration solvent carrying line L₂₂, and the dehydration solvent carrying line L₂₃. The dehydration solvent conveying pump 73 ejects the dehydration solvent supplied from the contactor 62 toward the still column 72.

Since the dehydration solvent conveying pump 73 is driven in step S205, the dehydration solvent is conveyed from the contactor 62 to the still column 72. Further, the operation of the pump 84 causes the dehydration solvent to be conveyed to the contactor 62 through the dehydration solvent carrying line L₂₄. In this way, the dehydration solvent is in a state of circulating in the order of the contactor 62, the still column 72, and the contactor 62.

In step S206, the compression control device (not illustrated) starts up all of the plurality of compressors 50, and starts compression of the process gas supplied from the CO₂ recovery device 12. The compressor 50-1 and the compressor 50-2 compress the process gas containing the moisture supplied from the CO₂ recovery device 12, and supply the same to the CO₂ supply line L₁₁ of the dehydration device 60. The compressor 50-3 and the compressor 50-4 compress the process gas with moisture removed supplied from the dehydration device 60, and supply the same to downstream equipment.

In step S207, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S208, the dehydration control device 90 determines whether the pressure Pco transmitted from the pressure sensor 69 is equal to or higher than the first predetermined pressure Ppr1. If YES, the processing proceeds to step S209. If NO, the processing in step S207 is performed again.

In step S209, the dehydration control device 90 transmits a control signal for opening the first on-off valve 75. The first on-off valve 75 is opened in response to the control signal transmitted from the dehydration control device 90. The first on-off valve 75 is opened because the pressure Pco is equal to or higher than the first predetermined pressure Ppr1, and the dehydration solvent can be carried by the pressure of the process gas itself from the contactor 62 to the flash drum 74 via the dehydration solvent carrying line L₂₁.

In step S210, the dehydration control device 90 transmits a control signal for stopping the dehydration solvent conveying pump 73. The dehydration solvent conveying pump 73 stops the operation of sucking in and ejecting the dehydration solvent in response to the control signal received from the dehydration control device 90.

In step S211, so as to open the upstream-side on-off valve 95 provided in the dehydration solvent carrying line L₂₁ on the upstream side of the flash drum 74, the dehydration control device 90 controls the upstream-side on-off valve 95.

In step S212, so as to open the downstream-side on-off valve 96 provided in the dehydration solvent carrying line L₂₂ on the downstream side of the flash drum 74, the dehydration control device 90 controls the downstream-side on-off valve 96.

In step S213, so as to close the second on-off valve 76 provided in the bypass line L₂₆, the dehydration control device 90 controls the second on-off valve 76. Since the second on-off valve 76 is closed, and the upstream-side on-off valve 95 and the downstream-side on-off valve 96 are opened, the dehydration solvent is supplied from the contactor 62 to the flash drum 74.

In step S214, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S215, the dehydration control device 90 determines whether the pressure Pco transmitted from the pressure sensor 69 is equal to or higher than the first predetermined pressure Ppr1. If YES, the processing proceeds to step S216. If NO, the processing proceeds to step S217.

In step S216, the dehydration control device 90 and the compression control device determine whether an operation stop condition for stopping the dehydration-compression system 10A is satisfied. If YES, the processing proceeds to step S222. If NO, the processing in step S214 is performed again.

In step S217, so as to open the second on-off valve 76 provided in the bypass line L₂₆, the dehydration control device 90 controls the second on-off valve 76.

In step S218, so as to close the upstream-side on-off valve 95 provided in the dehydration solvent carrying line L₂₁ on the upstream side of the flash drum 74, the dehydration control device 90 controls the upstream-side on-off valve 95.

In step S219, so as to close the downstream-side on-off valve 96 provided in the dehydration solvent carrying line L₂₂ on the downstream side of the flash drum 74, the dehydration control device 90 controls the downstream-side on-off valve 96.

In step S220, so as to close the first on-off valve 75 provided in the bypass line L₂₅, the dehydration control device 90 controls the first on-off valve 75.

In step S221, the dehydration control device 90 drives the dehydration solvent conveying pump 73. Since the pressure Pco inside the contactor 62 falls below the first predetermined pressure Ppr1, the dehydration solvent conveying pump 73 is driven to continue the conveyance of the dehydration solvent from the contactor 62 to the flash drum 74. The dehydration solvent conveying pump 73 ejects the dehydration solvent supplied from the contactor 62 toward the flash drum 74, and conveys the dehydration solvent via the dehydration solvent carrying line L₂₁.

In step S222, since the operation stop condition for stopping the dehydration-compression system 10A is satisfied, the compression control device stops all of the plurality of compressors 50. Stopping the compressors 50 stops the supply of the process gas from the compressors 50 to the CO₂ supply line L₁₁.

In step S223, since the operation stop condition for stopping the dehydration-compression system 10A is satisfied, the dehydration control device 90 stops the dehydration device 60A. Each part of the dehydration device 60A stops operation in response to a control signal transmitted from the dehydration control device 90.

According to the dehydration device 60A of the present embodiment, for example, at the time of starting up when the process gas is supplied without being sufficiently compressed by the compressors 50, if the pressure inside the contactor 62 detected by the pressure sensor 69 is lower than the first predetermined pressure Ppr1, the second on-off valve 76 disposed in the bypass line L₂₆ coupling the upstream side and the downstream side of the flash drum 74 is opened. Thus, even when the pressure Pfl inside the flash drum 74 is not sufficient to convey the dehydration solvent to the still column 72, the dehydration solvent is conveyed from the contactor 62 to the still column 72, which makes it possible to perform the processing of removing moisture from the process gas using the dehydration solvent. Furthermore, the dehydration solvent can be conveyed from the contactor 62 to the still column 72 without a pressurizing source being provided that pressurizes the inside of the flash drum 74.

### Third Embodiment

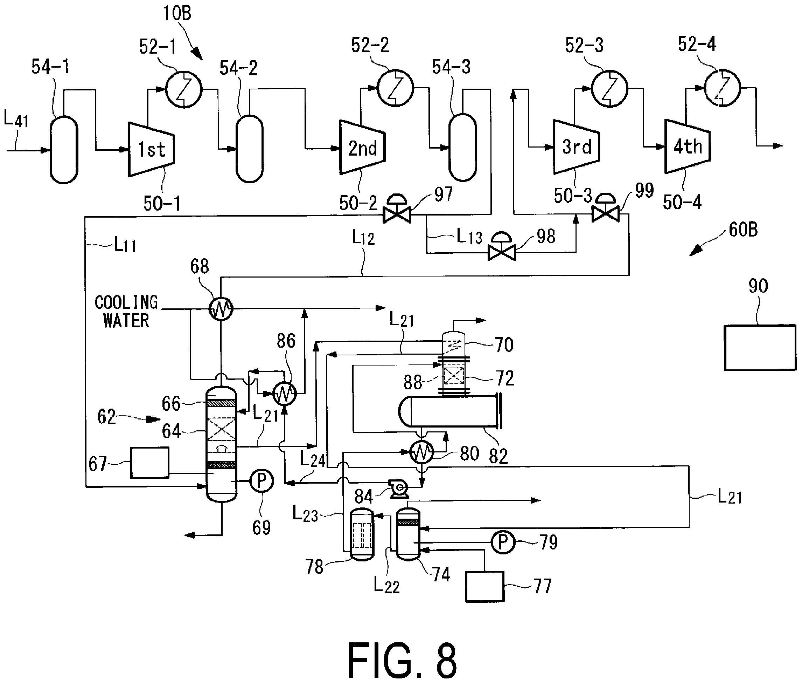

Next, a dehydration-compression system 10B according to a third embodiment of the present disclosure will be described with reference to drawings. FIG. 8 is a configuration diagram of the dehydration-compression system 10B according to the present embodiment. The present embodiment is a modification example of the first embodiment. Unless otherwise described below, the present embodiment is similar to the first embodiment, and description is omitted below.

At the time of starting up when the pressure Pfl inside the contactor 62 is lower than the first predetermined pressure Ppr1, the dehydration-compression system 10 of the first embodiment drives the dehydration solvent conveying pump 73 to convey the dehydration solvent from the contactor 62 to the flash drum 74. In contrast, at the time of starting up, the dehydration-compression system 10B of the present embodiment causes the dehydration device 60B to be bypassed rather than being passed through until the inside of the contactor 62 is pressurized to the first predetermined pressure Ppr1 or greater.

As illustrated in FIG. 8, the dehydration device 60A of the dehydration-compression system 10B according to the present embodiment includes a compressed gas supply source (pressurizing unit) 67, a coupling line L₁₃, a supply valve 97, a coupling valve 98, and a discharge valve 99. The compressed gas supply source 67, the supply valve 97, the coupling valve 98, and the discharge valve 99 are controlled by a control signal transmitted from the dehydration control device 90.

The compressed gas supply source 67 is a device that supplies compressed gas (pressurizing gas) into the contactor 62. The compressed gas supply source 67 is supplied with compressed gas (e.g., compressed nitrogen, compressed air) having a predetermined pressure (e.g., a set pressure within the range of 5 kg/cm² or greater and 10 kg/cm² or less).

The coupling line L₁₃ is a pipe that couples the CO₂ supply line L₁₁ and the dry CO₂ supply line L₁₂. The coupling line L₁₃ is used, at the time when the dehydration-compression system 10B starts up, to cause the dehydration device 60B to be bypassed rather than being passed through until the inside of the contactor 62 is pressurized to the first predetermined pressure Ppr1 or greater.

The supply valve 97 is an on-off valve disposed in the CO₂ supply line L₁₁ on the downstream side of a coupling position with the coupling line L₁₃. The supply valve 97 is opened when the process gas is supplied to the dehydration device 60B, and closed when the dehydration device 60B is bypassed without the process gas being supplied to the dehydration device 60B.

The coupling valve 98 is an on-off valve disposed in the coupling line L₁₃. The coupling valve 98 is closed when the process gas is supplied to the dehydration device 60B, and opened when the dehydration device 60B is bypassed without the process gas being supplied to the dehydration device 60B.

The discharge valve 99 is an on-off valve disposed in the dry CO₂ supply line L₁₂ on the upstream side of a coupling position with the coupling line L₁₃. The discharge valve 99 is opened when the process gas is supplied to the dehydration device 60B, and closed when the dehydration device 60B is bypassed without the process gas being supplied to the dehydration device 60B.

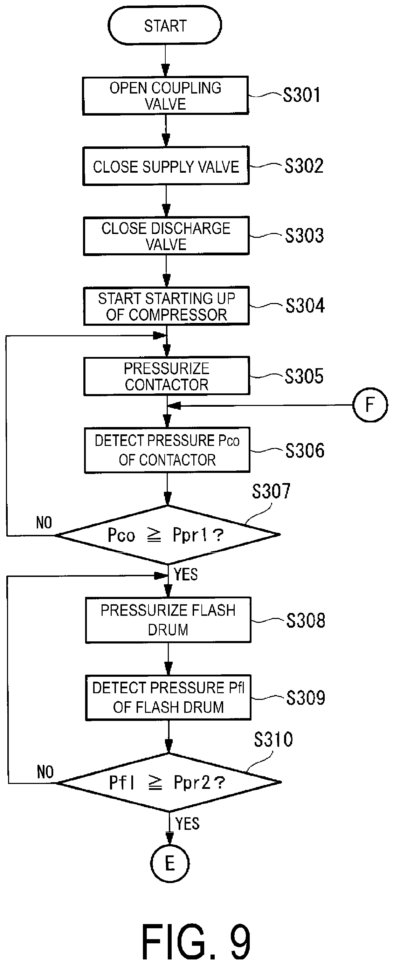

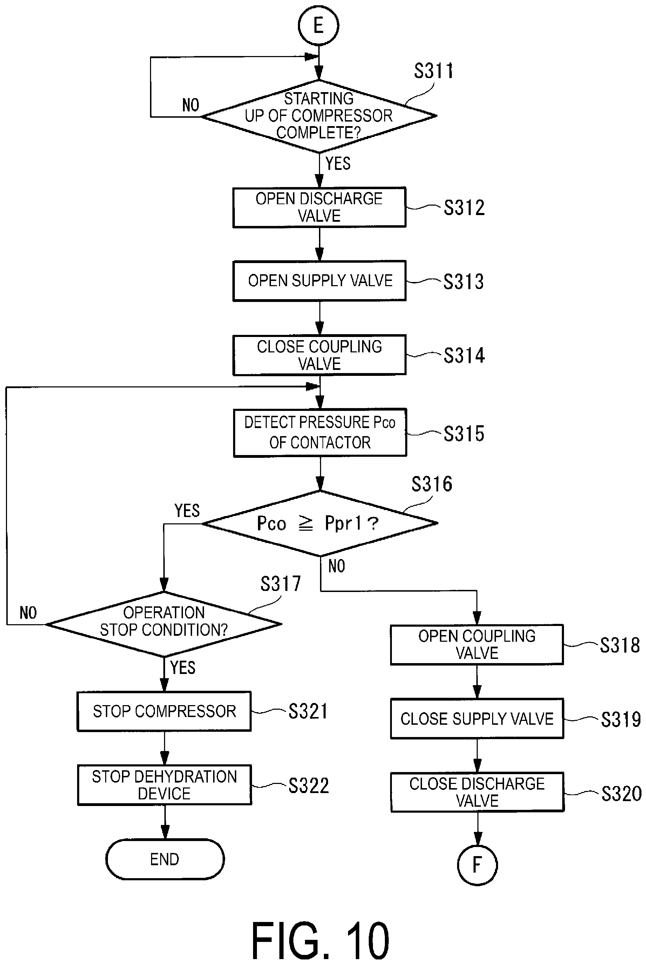

Next, processing performed by the dehydration-compression system 10B of the present embodiment will be described with reference to drawings. FIGS. 9 and 10 are flowcharts illustrating processing performed by the dehydration-compression system 10B according to the present embodiment. Each of the processing illustrated in FIGS. 9 and 10 is performed by the dehydration control device 90 that controls the dehydration device 60B, and a compression control device (not illustrated) that controls the plurality of compressors 50. Similar to the first embodiment, the processing illustrated in the flowcharts of FIGS. 9 and 10 is the processing performed when the dehydration-compression system 10B starts up.

In step S301, so as to open the coupling valve 98 provided in the coupling line L₁₃, the dehydration control device 90 controls the coupling valve 98.

In step S302, so as to close the supply valve 97 provided in the CO₂ supply line L₁₁, the dehydration control device 90 controls the supply valve 97.

In step S303, so as to close the discharge valve 99 provided in the dry CO₂ supply line L₁₂, the dehydration control device 90 controls the discharge valve 99.

In step S304, the compression control device (not illustrated) controls the compressors 50 so as to start the starting up of all of the plurality of compressors 50. The compressor 50-1 and the compressor 50-2 compress the process gas containing moisture supplied from the CO₂ recovery device 12, and supply the same from the CO₂ supply line L₁₁ to the coupling line L₁₃. The compressor 50-3 and the compressor 50-4 compress the process gas containing moisture supplied from the coupling line L₁₃, and supply the same to downstream equipment.

In step S305, the dehydration control device 90 controls the supply state of the compressed gas by the compressed gas supply source 67 so as to pressurize the contactor 62 to the first predetermined pressure Ppr1.

In step S306, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S307, the dehydration control device 90 determines whether the pressure Pco transmitted from the pressure sensor 69 is equal to or higher than the first predetermined pressure Ppr1. If YES, the processing proceeds to step S308. If NO, the processing in step S305 is performed again.

In step S308, the dehydration control device 90 controls the supply state of the compressed gas by the compressed gas supply source 77 so as to pressurize the flash drum 74 to the second predetermined pressure Ppr2.

In step S309, the dehydration control device 90 transmits a control signal for causing the pressure sensor 79 to detect the pressure Pfl inside the flash drum 74. The dehydration control device 90 detects the pressure Pfl transmitted from the pressure sensor 79 in response to the control signal transmitted to the pressure sensor 79.

In step S310, the dehydration control device 90 determines whether the pressure Pfl transmitted from the pressure sensor 79 is equal to or higher than the second predetermined pressure Ppr2. If YES, the processing proceeds to step S311. If NO, the processing in step S308 is performed again.

In step S311, the compression control device determines whether the starting up of all of the plurality of compressors 50 has been completed. If YES, the processing proceeds to step S312. If NO, the processing in step S311 is performed again.

In step S312, so as to open the discharge valve 99 provided in the dry CO₂ supply line L₁₂, the dehydration control device 90 controls the discharge valve 99.

In step S313, so as to open the supply valve 97 provided in the CO₂ supply line L₁₁, the dehydration control device 90 controls the supply valve 97.

In step S314, so as to close the coupling valve 98 provided in the coupling line L₁₃, the dehydration control device 90 controls the coupling valve 98. When the discharge valve 99 and the supply valve 97 is opened and the coupling valve 98 is closed, the process gas supplied from the CO₂ recovery device 12 is in a state of being supplied to the dehydration device 60B via the CO₂ supply line L₁₁.

In step S315, the dehydration control device 90 transmits a control signal for causing the pressure sensor 69 to detect the pressure Pco inside the contactor 62. The dehydration control device 90 detects the pressure Pco transmitted from the pressure sensor 69 in response to the control signal transmitted to the pressure sensor 69.

In step S316, the dehydration control device 90 determines whether the pressure Pco transmitted from the pressure sensor 69 is equal to or higher than the first predetermined pressure Ppr1. If YES, the processing proceeds to step S317. If NO, the processing proceeds to step S318.

In step S317, the dehydration control device 90 and the compression control device determine whether an operation stop condition for stopping the dehydration-compression system 10B is satisfied. If YES, the processing proceeds to step S321. If NO, the processing in step S315 is performed again.

In step S318, so as to open the coupling valve 98 provided in the coupling line L₁₃, the dehydration control device 90 controls the coupling valve 98.

In step S319, so as to close the supply valve 97 provided in the CO₂ supply line L₁₁, the dehydration control device 90 controls the supply valve 97.

In step S320, so as to close the discharge valve 99 provided in the dry CO₂ supply line L₁₂, the dehydration control device 90 controls the discharge valve 99.

In step S321, since the operation stop condition for stopping the dehydration-compression system 10B is satisfied, the compression control device stops all of the plurality of compressors 50. Stopping the compressors 50 stops the supply of the process gas from the compressors 50 to the CO₂ supply line L₁₁.

In step S322, since the operation stop condition for stopping the dehydration-compression system 10B is satisfied, the dehydration control device 90 stops the dehydration device 60B. Each part of the dehydration device 60B stops operation in response to a control signal transmitted from the dehydration control device 90.

According to the dehydration device 60B of the present embodiment, for example, at the time of starting up when the process gas is supplied without being sufficiently compressed by the compressors 50, if the pressure Pco inside the contactor 62 detected by the pressure sensor 69 is lower than the first predetermined pressure Ppr1, the supply valve 97 is closed and the coupling valve 98 is opened to lead the process gas to be supplied to the CO₂ supply line L₁₁ to the dry CO₂ supply line L₁₂ via the coupling line L₁₃. Thus, if the pressure Pco inside the contactor 62 is lower than the first predetermined pressure Ppr1, the contactor 62 can be pressurized by the compressed gas supplied from the compressed gas supply source 67 without the process gas being supplied to the contactor 62.

Furthermore, if the pressure Pco inside the contactor 62 detected by the pressure sensor 69 is equal to or higher than the first predetermined pressure Ppr1, the supply valve 97 is opened and the coupling valve 98 is closed to supply the process gas to be supplied to the CO₂ supply line L₁₁ to the contactor 62. Thus, if the pressure Pco inside the contactor 62 is equal to or higher than the first predetermined pressure Ppr1, it is possible to supply the process gas to the contactor 62, convey the dehydration solvent by the pressure Pco inside the contactor 62 from the contactor 62 to the still column 72, and perform the processing of removing moisture from the process gas using the dehydration solvent.

The dehydration device (60) described in the above-described embodiments can be understood, for example, as follows.

A dehydration device (60) according to the present disclosure removes moisture from a process gas that contains the moisture and is compressed by a compressor (50), and includes: an absorption unit (62) configured to remove the moisture from the process gas by bringing the process gas into contact with a dehydration solvent to cause the dehydration solvent to absorb the moisture; a first pressure detecting unit (69) configured to detect a pressure inside the absorption unit; a still unit (72) configured to separate the moisture from the dehydration solvent by heating the dehydration solvent that absorbed the moisture at the contactor; a carrying line (L₂₁ and L₂₃) configured to carry the dehydration solvent from the absorption unit to the still unit; a conveying pump (73) disposed in the carrying line and configured to suck in the dehydration solvent conveyed from the absorption unit and eject the dehydration solvent toward the still unit; a first bypass line (L₂₅) coupling the carrying line upstream of the conveying pump and the carrying line downstream of the conveying pump; a first on-off valve (75) disposed in the first bypass line; and a control unit (90) configured to control the conveying pump and the first on-off valve; wherein in a case where a pressure detected by the first pressure detecting unit is lower than a first predetermined pressure, the control unit closes the first on-off valve and causes the conveying pump to operate, and in a case where the pressure detected by the first pressure detecting unit is equal to or higher than the first predetermined pressure, the control unit opens the first on-off valve and causes the conveying pump to stop.

According to the dehydration device according to the present disclosure, for example, at the time of starting up when the process gas is supplied without being sufficiently compressed by the compressor, if the pressure inside the absorption unit detected by the first pressure detecting unit is lower than the first predetermined pressure, the first on-off valve disposed in the first bypass line coupling the upstream side and the downstream side of the conveying pump is closed, and the conveying pump operates. Thus, even if the pressure inside the absorption unit is lower than the first predetermined pressure, the dehydration solvent is conveyed from the absorption unit to the still unit, which makes it possible to perform the processing of removing moisture from the process gas using the dehydration solvent.

Furthermore, if the pressure inside the absorption unit detected by the first pressure detecting unit is equal to or higher than the first predetermined pressure, the first on-off valve disposed in the first bypass line coupling the upstream side and the downstream side of the conveying pump is opened, and the conveying pump stops. Thus, if the pressure inside the absorption unit is equal to or higher than the first predetermined pressure, the dehydration solvent is conveyed by the pressure inside the absorption unit from the absorption unit to the still unit without the conveying pump being used, which makes it possible to perform the processing of removing moisture from the process gas using the dehydration solvent. In this way, according to the dehydration device according to the present disclosure, it is possible to perform the processing of removing moisture from the process gas using the dehydration solvent to prevent failure such as corrosion from occurring in downstream equipment even when the inside of the absorption unit is not sufficiently pressurized by the process gas.

In the dehydration device according to the present disclosure, the first predetermined pressure is a pressure capable of causing the dehydration solvent to be carried from the absorption unit to the still unit via the carrying line. If the pressure inside the absorption unit is lower than the first predetermined pressure, the first on-off valve disposed in the first bypass line coupling the upstream side and the downstream side of the conveying pump is closed, and the conveying pump operates. Thus, even when the inside of the absorption unit is not sufficiently pressurized by the process gas, it is possible to perform the processing of removing moisture from the process gas using the dehydration solvent.

A dehydration device according to the present disclosure includes: an evaporation unit (74) disposed in the carrying line and configured to decompress the dehydration solvent to evaporate the process gas absorbed by the dehydration solvent; a second bypass line (L₂₆) coupling the carrying line upstream of the evaporation unit and the carrying line downstream of the evaporation unit; and a second on-off valve (76) disposed in the second bypass line; wherein in a case where the pressure detected by the first pressure detecting unit is lower than the first predetermined pressure, the control unit opens the second on-off valve, and in a case where the pressure detected by the first pressure detecting unit is equal to or higher than the first predetermined pressure, the control unit closes the second on-off valve.

According to the dehydration device according to the present disclosure, for example, at the time of starting up when the process gas is supplied without being sufficiently compressed by the compressor, if the pressure inside the absorption unit detected by the first pressure detecting unit is lower than the first predetermined pressure, the second on-off valve disposed in the second bypass line coupling the upstream side and the downstream side of the evaporation unit is opened. Thus, even when the pressure inside the evaporation unit is not sufficient to convey the dehydration solvent to the still unit, the dehydration solvent is conveyed from the absorption unit to the still unit, which makes it possible to perform the processing of removing moisture from the process gas using the dehydration solvent. Furthermore, the dehydration solvent can be conveyed from the absorption unit to the still unit without a pressurizing source being provided that pressurizes the inside of the evaporation unit.

Furthermore, if the pressure inside the evaporation unit detected by the second pressure detecting unit is equal to or higher than the second predetermined pressure, the second on-off valve disposed in the second bypass line coupling the upstream side and the downstream side of the evaporation unit is closed. Thus, when the pressure inside the evaporation unit is equal to or higher than the second predetermined pressure and the process gas absorbed by the dehydration solvent can be appropriately evaporated, the process gas absorbed by the dehydration solvent is evaporated and then the dehydration solvent is conveyed upstream, which makes it possible to perform the processing of removing moisture from the process gas using the dehydration solvent.

In the dehydration device according to the present disclosure, the second predetermined pressure is a pressure capable of causing the dehydration solvent to be carried from the evaporation unit to the still unit via the carrying line. If the pressure inside the absorption unit is lower than the first predetermined pressure, the second on-off valve disposed in the second bypass line coupling the upstream side and the downstream side of the evaporation unit is opened. Thus, even when the inside of the evaporation unit is not sufficiently pressurized by the process gas, the dehydration solvent is conveyed from the absorption unit to the still unit, which makes it possible to perform the processing of removing moisture from the process gas using the dehydration solvent.

A dehydration device (60) according to the present disclosure removes moisture from a process gas that contains the moisture and is compressed by a compressor (50), and includes: an absorption unit (62) configured to remove the moisture from the process gas by bringing the process gas into contact with a dehydration solvent to cause the dehydration solvent to absorb the moisture; a pressurizing unit (67) configured to supply pressurizing gas to the absorption unit; a pressure detecting unit (69) configured to detect a pressure inside the absorption unit; a still unit (72) configured to separate the moisture from the dehydration solvent by heating the dehydration solvent that absorbed the moisture at the contactor; a supply line (L₁₁) configured to supply the process gas compressed by the compressor to the absorption unit; a carrying line (L₂₁ and L₂₃) configured to carry the dehydration solvent from the absorption unit to the still unit; a discharge line (L₁₂) configured to discharge the process gas from which the moisture was removed at the absorption unit; a coupling line (L₁₃) coupling the supply line and the discharge line; a supply valve (97) disposed in the supply line downstream of a coupling position with the coupling line; a coupling valve (98) disposed in the coupling line; a discharge valve (99) disposed in the discharge line; and a control unit (90) configured to control the supply valve, the coupling valve, and the discharge valve; wherein in a case where a pressure detected by the pressure detecting unit is lower than a predetermined pressure, the control unit closes the supply valve and the discharge valve and opens the coupling valve, and in a case where the pressure detected by the pressure detecting unit is equal to or higher than the predetermined pressure, the control unit opens the supply valve and the discharge valve and closes the coupling valve.

According to the dehydration device according to the present disclosure, for example, at the time of starting up when the process gas is supplied without being sufficiently compressed by the compressor, if the pressure inside the absorption unit detected by the pressure detecting unit is lower than the predetermined pressure, the supply valve and the discharge valve are closed and the coupling valve is opened to lead the process gas to be supplied to the supply line to the discharge line via the coupling line. Thus, if the pressure inside the absorption unit is lower than the predetermined pressure, the absorption unit can be pressurized by the pressurizing gas supplied from the pressurizing unit without the process gas being supplied to the absorption unit.

Furthermore, if the pressure inside the absorption unit detected by the pressure detecting unit is equal to or higher than the predetermined pressure, the supply valve and the discharge valve are opened and the coupling valve is closed to supply the process gas to be supplied to the supply line to the absorption unit. Thus, if the pressure inside the absorption unit is equal to or higher than the predetermined pressure, it is possible to supply the process gas to the absorption unit, convey the dehydration solvent by the pressure inside the absorption unit from the absorption unit to the still unit, and perform the processing of removing moisture from the process gas using the dehydration solvent.

In the dehydration device according to the present disclosure, the predetermined pressure is a pressure capable of causing the dehydration solvent to be carried from the absorption unit to the still unit via the carrying line. If the pressure inside the absorption unit is equal to or higher than the predetermined pressure, the process gas to be supplied to the supply line is supplied to the absorption unit. Thus, the dehydration solvent is conveyed by the pressure inside the absorption unit from the absorption unit to the still unit, which makes it possible to perform the processing of removing moisture from the process gas using the dehydration solvent.

A dehydration-compression system (10) according to the present disclosure includes: the dehydration device according to any of the above; first compressors (50-1 and 50-2) configured to compress process gas containing moisture; and second compressors (50-3 and 50-4) to which the process gas with the moisture removed is supplied and that is configured to compress the process gas.

According to the dehydration-compression system according to the present disclosure, even when the inside of the absorption unit is not sufficiently pressurized by the process gas, it is possible to perform the processing of removing moisture from the process gas using the dehydration solvent. Thus, the process gas containing moisture is supplied to the second compressors that compress the process gas supplied from the dehydration device, which makes it possible to prevent failure such as corrosion from occurring.

A CO₂ recovery system according to the present disclosure includes: a CO₂ contactor (22) configured to remove, by bringing exhaust gas containing CO₂ into contact with CO₂ absorbing liquid, the CO₂ in the exhaust gas; an absorbing liquid regeneration column (30) configured to cause the CO₂ absorbing liquid that absorbed the CO₂ at the CO₂ contactor to release the CO₂; and the dehydration-compression system of the above configured to compress the CO₂ released at the absorbing liquid regeneration column, and remove moisture contained in the CO₂.

According to the CO₂ recovery system according to the present disclosure, even when the inside of the absorption unit is not sufficiently pressurized by the process gas, it is possible to perform the processing of removing moisture from the process gas using the dehydration solvent. Thus, the process gas containing moisture is supplied to the second compressors that compress the process gas supplied from the dehydration device, which makes it possible to prevent failure such as corrosion from occurring.

A dehydration device control method according to the present disclosure is a dehydration device control method that removes moisture from a process gas that contains the moisture and is compressed by a compressor, dehydration device including an absorption unit configured to remove the moisture from the process gas by bringing the process gas into contact with a dehydration solvent to cause the dehydration solvent to absorb the moisture, a still unit configured to separate the moisture from the dehydration solvent by heating the dehydration solvent that absorbed the moisture at the contactor, a carrying line configured to carry the dehydration solvent from the absorption unit to the still unit, a conveying pump disposed in the carrying line and configured to suck in the dehydration solvent conveyed from the absorption unit and eject the dehydration solvent toward the still unit, a first bypass line coupling the carrying line upstream of the conveying pump and the carrying line downstream of the conveying pump, and a first on-off valve disposed in the first bypass line, the method including: a first pressure detecting step of detecting a pressure inside the absorption unit; a first control step of closing the first on-off valve and causing the conveying pump to operate in a case where a pressure detected at the first pressure detecting step is lower than a first predetermined pressure; and a second control step of opening the first on-off valve and causing the conveying pump to stop in a case where the pressure detected at the first pressure detecting step is equal to or higher than the first predetermined pressure.

According to the dehydration device control method according to the present disclosure, it is possible to perform the processing of removing moisture from the process gas using the dehydration solvent to prevent failure such as corrosion from occurring in downstream equipment even when the inside of the absorption unit is not sufficiently pressurized by the process gas.

A dehydration device control method according to the present disclosure is a dehydration device control method that removes moisture from a process gas that contains the moisture and is compressed by a compressor, the dehydration device including an absorption unit configured to remove the moisture from the process gas by bringing the process gas into contact with a dehydration solvent to cause the dehydration solvent to absorb the moisture, a pressurizing unit configured to supply pressurizing gas to the absorption unit, a still unit configured to separate the moisture from the dehydration solvent by heating the dehydration solvent that absorbed the moisture at the contactor, a supply line configured to supply the process gas compressed by the compressor to the absorption unit, a carrying line configured to carry the dehydration solvent from the absorption unit to the still unit, a discharge line configured to discharge the process gas from which the moisture was removed at the absorption unit, a coupling line coupling the supply line and the discharge line, a supply valve disposed in the supply line downstream of a coupling position with the coupling line, a coupling valve disposed in the coupling line, and a discharge valve disposed in the discharge line, the method including: a pressure detecting step of detecting a pressure inside the absorption unit; a first control step of closing the supply valve and the discharge valve and opening the coupling valve in a case where a pressure detected at the pressure detecting step is lower than a predetermined pressure; and a second control step of opening the supply valve and the discharge valve and closing the coupling valve in a case where the pressure detected at the pressure detecting step is equal to or higher than the predetermined pressure.

According to the dehydration device control method according to the present disclosure, if the pressure inside the absorption unit is lower than the predetermined pressure, the absorption unit can be pressurized by the pressurizing gas supplied from the pressurizing unit without the process gas being supplied to the absorption unit. Furthermore, if the pressure inside the absorption unit is equal to or higher than the predetermined pressure, it is possible to supply the process gas to the absorption unit, convey the dehydration solvent by the pressure inside the absorption unit from the absorption unit to the still unit, and perform the processing of removing moisture from the process gas using the dehydration solvent.

### Reference Signs List

10, 10A, 10B Dehydration-compression system
22 CO2 contactor
30 Absorbing liquid regeneration column
50, 50-1, 50-2, 50-3, 50-4 Compressor
60, 60A, 60B Dehydration device
62 Contactor (absorption unit)
67 Compressed gas supply source (pressurizing unit)
69 Pressure sensor (first pressure detecting unit)
72 Still column (still unit)
73 Dehydration solvent conveying pump
74 Flash drum (evaporation unit)
75 First on-off valve
76 Second on-off valve
77 Compressed gas supply source
79 Pressure sensor (second pressure detecting unit)
84 Pump
90 Dehydration control device (control unit)
95 Upstream-side on-off valve
96 Downstream-side on-off valve
97 Supply valve
98 Coupling valve
99 Discharge valve
L₁₁ CO₂ supply line
L₁₂ Dry CO₂ supply line
L₁₃ Coupling line
L₂₁, L₂₂, L₂₃, L₂₄ Dehydration solvent carrying line
L₂₅ Bypass line (first bypass line)
L₂₆ Bypass line (second bypass line)

## Claims

1. A dehydration device (60) that removes moisture from a process gas that contains the moisture and is compressed by a compressor (50), the dehydration device (60) comprising:
an absorption unit (62) configured to remove the moisture from the process gas by bringing the process gas into contact with a dehydration solvent to cause the dehydration solvent to absorb the moisture;
a first pressure detecting unit (69) configured to detect a pressure inside the absorption unit (62);
a still unit (72) configured to separate the moisture from the dehydration solvent by heating the dehydration solvent that absorbed the moisture at the absorption unit (62);
a carrying line (L₂₁, L₂₂, L₂₃) configured to carry the dehydration solvent from the absorption unit (62) to the still unit (72);
a conveying pump (73) disposed in the carrying line (L₂₁, L₂₂, L₂₃) and configured to suck in the dehydration solvent conveyed from the absorption unit (62) and eject the dehydration solvent toward the still unit (72);
a first bypass line (L₂₅) coupling the carrying line (L₂₁, L₂₂, L₂₃) upstream of the conveying pump (73) and the carrying line (L₂₁, L₂₂, L₂₃) downstream of the conveying pump (73);
a first on-off valve (75) disposed in the first bypass line (L₂₅); and
a control unit (90) configured to control the conveying pump (73) and the first on-off valve (75); **characterized in that**
in a case where a pressure detected by the first pressure detecting unit (69) is lower than a first predetermined pressure, the control unit (90) closes the first on-off valve (75) and causes the conveying pump (73) to operate, and in a case where the pressure detected by the first pressure detecting unit (69) is equal to or higher than the first predetermined pressure, the control unit (90) opens the first on-off valve (75) and causes the conveying pump (73) to stop.

2. The dehydration device (60) according to claim 1, wherein the first predetermined pressure is a pressure capable of causing the dehydration solvent to be carried from the absorption unit (62) to the still unit (72) via the carrying line (L₂₁, L₂₂, L₂₃).

3. The dehydration device (60) according to claim 1, further comprising:
an evaporation unit (74) disposed in the carrying line (L₂₁, L₂₂, L₂₃) and configured to decompress the dehydration solvent to evaporate the process gas absorbed by the dehydration solvent;
a second bypass line (L₂₆) coupling the carrying line (L₂₁, L₂₂, L₂₃) upstream of the evaporation unit (74) and the carrying line (L₂₁, L₂₂, L₂₃) downstream of the evaporation unit (74); and
a second on-off valve (76) disposed in the second bypass line (L₂₆); wherein
in a case where the pressure detected by the first pressure detecting unit (69) is lower than the first predetermined pressure, the control unit (90) opens the second on-off valve (L₂₆), and in a case where the pressure detected by the first pressure detecting unit (69) is equal to or higher than the first predetermined pressure, the control unit (90) closes the second on-off valve (L₂₆).

4. The dehydration device (60) according to claim 3, wherein the first predetermined pressure is a pressure capable of causing the dehydration solvent to be carried from the absorption unit (62) to the still unit (72) via the carrying line (L₂₁, L₂₂, L₂₃).

5. A dehydration device (60) that removes moisture from a process gas that contains the moisture and is compressed by a compressor (50), the dehydration device (60) comprising:
an absorption unit (62) configured to remove the moisture from the process gas by bringing the process gas into contact with a dehydration solvent to cause the dehydration solvent to absorb the moisture;
a pressurizing unit (67) configured to supply pressurizing gas to the absorption unit (62);
a pressure detecting unit (69) configured to detect a pressure inside the absorption unit (62);
a still unit (72) configured to separate the moisture from the dehydration solvent by heating the dehydration solvent that absorbed the moisture at the absorption unit (62);
a supply line (Ln) configured to supply the process gas compressed by the compressor (50) to the absorption unit (62);
a carrying line (L₂₁, L₂₂, L₂₃) configured to carry the dehydration solvent from the absorption unit (62) to the still unit (72);
a discharge line (L₁₂) configured to discharge the process gas from which the moisture was removed at the absorption unit (62);
a coupling line (L₁₃) coupling the supply line (Ln) and the discharge line (L₁₂);
a supply valve (97) disposed in the supply line (Ln) downstream of a coupling position with the coupling line (L₁₃);
a coupling valve (98) disposed in the coupling line (L₁₃);
a discharge valve (99) disposed in the discharge line (L₁₂); and
a control unit (90) configured to control the supply valve (97), the coupling valve (98), and the discharge valve (99); **characterized in that**
in a case where a pressure detected by the pressure detecting unit (69) is lower than a predetermined pressure, the control unit (90) closes the supply valve (97) and the discharge valve (99) and opens the coupling valve (98), and in a case where the pressure detected by the pressure detecting unit (69) is equal to or higher than the predetermined pressure, the control unit (90) opens the supply valve (97) and the discharge valve (99) and closes the coupling valve (98).

6. The dehydration device (60) according to claim 5, wherein the predetermined pressure is a pressure capable of causing the dehydration solvent to be carried from the absorption unit (62) to the still unit (72) via the carrying line (L₂₁, L₂₂, L₂₃).

7. A dehydration-compression system (10, 10A, 10B) comprising:
the dehydration device (60) according to any one of claims 1 to 6;
a first compressor (50-1, 50-2) configured to compress process gas containing moisture; and
a second compressor (50-3, 50-4) to which the process gas with the moisture removed is supplied from the dehydration device (60) and that is configured to compress the process gas.

8. A CO₂ recovery system comprising:
a CO₂ contactor (22) configured to remove, by bringing exhaust gas containing CO₂ into contact with CO₂ absorbing liquid, the CO₂ in the exhaust gas;
an absorbing liquid regeneration column (30) configured to cause the CO₂ absorbing liquid that absorbed the CO₂ at the CO₂ contactor (22) to release the CO₂; and
the dehydration-compression system (60) according to claim 7 configured to compress the CO₂ released at the absorbing liquid regeneration column and remove moisture contained in the CO₂.

9. A dehydration device control method that removes moisture from a process gas that contains the moisture and is compressed by a compressor (50),
the dehydration device (60) including
an absorption unit (62) configured to remove the moisture from the process gas by bringing the process gas into contact with a dehydration solvent to cause the dehydration solvent to absorb the moisture,
a still unit (72) configured to separate the moisture from the dehydration solvent by heating the dehydration solvent that absorbed the moisture at the absorption unit (62),
a carrying line (L₂₁, L₂₂, L₂₃) configured to carry the dehydration solvent from the absorption unit (62) to the still unit (72),
a conveying pump (73) disposed in the carrying line (L₂₁, L₂₂, L₂₃) and configured to suck in the dehydration solvent conveyed from the absorption unit (62) and eject the dehydration solvent toward the still unit (72),
a first bypass line (L₂₅) coupling the carrying line (L₂₁, L₂₂, L₂₃) upstream of the conveying pump (73) and the carrying line (L₂₁, L₂₂, L₂₃) downstream of the conveying pump (73), and
a first on-off valve (75) disposed in the first bypass line (L₂₅),
**characterized in that** the method comprising:
a first pressure detecting step (S 108) of detecting a pressure inside the absorption unit (62);
a first control step (S105,S106) of closing the first on-off valve (75) and causing the conveying pump (73) to operate in a case where a pressure detected at the first pressure detecting step (S108) is lower than a first predetermined pressure; and
a second control step (S110,S111) of opening the first on-off valve (75) and causing the conveying pump (73) to stop in a case where the pressure detected at the first pressure detecting step (S 108) is equal to or higher than the first predetermined pressure.

10. A dehydration device control method that removes moisture from a process gas that contains the moisture and is compressed by a compressor,
the dehydration device (60) including
an absorption unit (62) configured to remove the moisture from the process gas by bringing the process gas into contact with a dehydration solvent to cause the dehydration solvent to absorb the moisture,
a pressurizing unit (67) configured to supply pressurizing gas to the absorption unit (62),
a still unit (72) configured to separate the moisture from the dehydration solvent by heating the dehydration solvent that absorbed the moisture at the absorption unit (62),
a supply line (Ln) configured to supply the process gas compressed by the compressor (50) to the absorption unit (62),
a carrying line (L₂₁, L₂₂, L₂₃) configured to carry the dehydration solvent from the absorption unit (62) to the still unit (72),
a discharge line (L₁₂) configured to discharge the process gas from which the moisture was removed at the absorption unit (62),
a coupling line (L₁₃) coupling the supply line (Ln) and the discharge line (L₁₂),
a supply valve (97) disposed in the supply line (Ln) downstream of a coupling position with the coupling line (L₁₃),
a coupling valve (98) disposed in the coupling line (L₁₃), and
a discharge valve (99) disposed in the discharge line (L₁₂),
**characterized in that** the method comprising:
a pressure detecting step (S315) of detecting a pressure inside the absorption unit (62);
a first control step (S318, S319) of closing the supply valve (97) and the discharge valve (99) and opening the coupling valve (98) in a case where a pressure detected at the pressure detecting step (S315) is lower than a predetermined pressure; and
a second control step (S313, S314) of opening the supply valve (97) and the discharge valve (99) and closing the coupling valve (98) in a case where the pressure detected at the pressure detecting step (S315) is equal to or higher than the predetermined pressure.

## Patentansprüche

1. Dehydratisierungsvorrichtung (60), die Feuchtigkeit aus einem Prozessgas entfernt, das die Feuchtigkeit enthält und durch einen Kompressor (50) komprimiert ist, wobei die Dehydratisierungsvorrichtung (60) umfasst:
eine Absorptionseinheit (62), die konfiguriert ist, um die Feuchtigkeit aus dem Prozessgas durch Inkontaktbringen des Prozessgases mit einem Dehydratisierungslösungsmittel, das das Dehydratisierungslösungsmittel veranlasst, die Feuchtigkeit zu absorbieren, zu entfernen;
eine erste Druckerfassungseinheit (69), die konfiguriert ist, um einen Druck innerhalb der Absorptionseinheit (62) zu erfassen;
eine Destilliergeräteinheit (72), die konfiguriert ist, um die Feuchtigkeit aus dem Dehydratisierungslösungsmittel durch Erwärmen des Dehydratisierungslösungsmittels, das die Feuchtigkeit in der Absorptionseinheit (62) absorbiert hat, abzutrennen;
eine Transportleitung (L₂₁, L₂₂, L₂₃), die konfiguriert ist, um das Dehydratisierungslösungsmittel von der Absorptionseinheit (62) zu der Destilliergeräteinheit (72) zu transportieren;
eine Beförderungspumpe (73), die in der Transportleitung (L₂₁, L₂₂, L₂₃) angeordnet ist und die konfiguriert ist, um das von der Absorptionseinheit (62) beförderte Dehydratisierungslösungsmittel einzusaugen und das Dehydratisierungslösungsmittel in Richtung der Destilliergeräteinheit (72) auszustoßen;
eine erste Umgehungsleitung (L₂₅), die die Transportleitung (L₂₁, L₂₂, L₂₃) stromaufwärts der Beförderungspumpe (73) und die Transportleitung (L₂₁, L₂₂, L₂₃) stromabwärts der Beförderungspumpe (73) verbindet;
ein erstes Ein-Aus-Ventil (75), das in der ersten Umgehungsleitung (L₂₅) angeordnet ist; und
eine Steuereinheit (90), die konfiguriert ist, um die Beförderungspumpe (73) und das erste Ein-Aus-Ventil (75) zu steuern; **dadurch gekennzeichnet, dass**
in einem Fall, in dem ein von der ersten Druckerfassungseinheit (69) erfasster Druck niedriger als ein erster vorbestimmter Druck ist, die Steuereinheit (90) das erste Ein-Aus-Ventil (75) schließt und die Beförderungspumpe (73) veranlasst in Betrieb zu sein, und in einem Fall, in dem der von der ersten Druckerfassungseinheit (69) erfasste Druck gleich oder höher als der erste vorbestimmte Druck ist, die Steuereinheit (90) das erste Ein-Aus-Ventil (75) öffnet und die Beförderungspumpe (73) veranlasst anzuhalten.

2. Dehydratisierungsvorrichtung (60) nach Anspruch 1, wobei der erste vorbestimmte Druck ein Druck ist, der fähig ist zu veranlassen, dass das Dehydratisierungslösungsmittel von der Absorptionseinheit (62) zu der Destilliergeräteinheit (72) über die Transportleitung (L₂₁, L₂₂, L₂₃) transportiert wird.

3. Dehydratisierungsvorrichtung (60) nach Anspruch 1, weiter umfassend:
eine Verdampfungseinheit (74), die in der Transportleitung (L₂₁, L₂₂, L₂₃) angeordnet und die konfiguriert ist, um das Dehydratisierungslösungsmittel zu dekomprimieren, um das von dem Dehydratisierungslösungsmittel absorbierte Prozessgas zu verdampfen;
eine zweite Umgehungsleitung (L₂₆), die die Transportleitung (L₂₁, L₂₂, L₂₃) stromaufwärts der Verdampfungseinheit (74) und die Transportleitung (L₂₁, L₂₂, L₂₃) stromabwärts der Verdampfungseinheit (74) verbindet; und
ein zweites Ein-Aus-Ventil (76), das in der zweiten Umgehungsleitung (L₂₆) angeordnet ist; wobei
in einem Fall, in dem der von der ersten Druckerfassungseinheit (69) erfasste Druck niedriger als der erste vorbestimmte Druck ist, die Steuereinheit (90) das zweite Ein-Aus-Ventil (L₂₆) öffnet, und in einem Fall, in dem der von der ersten Druckerfassungseinheit (69) erfasste Druck gleich oder höher als der erste vorbestimmte Druck ist, die Steuereinheit (90) das zweite Ein-Aus-Ventil (L₂₆) schließt.

4. Dehydratisierungsvorrichtung (60) nach Anspruch 3, wobei der erste vorbestimmte Druck ein Druck ist, der fähig ist zu veranlassen, dass das Dehydratisierungslösungsmittel von der Absorptionseinheit (62) zu der Destilliergeräteinheit (72) über die Transportleitung (L₂₁, L₂₂, L₂₃) transportiert wird.

5. Dehydratisierungsvorrichtung (60), die Feuchtigkeit aus einem Prozessgas entfernt, das die Feuchtigkeit enthält und durch einen Kompressor (50) komprimiert ist, wobei die Dehydratisierungsvorrichtung (60) umfasst:
eine Absorptionseinheit (62), die konfiguriert ist, um die Feuchtigkeit aus dem Prozessgas durch Inkontaktbringen des Prozessgases mit einem Dehydratisierungslösungsmittel, das das Dehydratisierungslösungsmittel veranlasst, die Feuchtigkeit zu absorbieren, zu entfernen;
eine Druckerhöhungseinheit (67), die konfiguriert ist, um der Absorptionseinheit (62) Gas mit erhöhtem Druck zuzuführen;
eine Druckerfassungseinheit (69), die konfiguriert ist, um einen Druck innerhalb der Absorptionseinheit (62) zu erfassen;
eine Destilliergeräteinheit (72), die konfiguriert ist, um die Feuchtigkeit aus dem Dehydratisierungslösungsmittel durch Erwärmen des Dehydratisierungslösungsmittels, das die Feuchtigkeit in der Absorptionseinheit (62) absorbiert hat, abzutrennen;
eine Zufuhrleitung (L₁₁), die konfiguriert ist, um das vom Kompressor (50) komprimierte Prozessgas an die Absorptionseinheit (62) zuzuführen;
eine Transportleitung (L₂₁, L₂₂, L₂₃), die konfiguriert ist, um das Dehydratisierungslösungsmittel von der Absorptionseinheit (62) zu der Destilliergeräteinheit (72) zu transportieren;
eine Abfuhrleitung (L₁₂), die konfiguriert ist, um das Prozessgas, aus dem die Feuchtigkeit in der Absorptionseinheit (62) entfernt wurde, abzuführen;
eine Verbindungsleitung (L₁₃), die die Zufuhrleitung (L₁₁) und die Abfuhrleitung (L₁₂) verbindet;
ein Zufuhrventil (97), das in der Zufuhrleitung (L₁₁) stromabwärts von einer Verbindungsposition mit der Verbindungsleitung (L₁₃) angeordnet ist;
ein Verbindungsventil (98), das in der Verbindungsleitung (L₁₃) angeordnet ist; ein Abfuhrventil (99), das in der Abfuhrleitung (L₁₂) angeordnet ist; und
eine Steuereinheit (90), die konfiguriert ist, um das Zufuhrventil (97), das Verbindungsventil (98) und das Abfuhrventil (99) zu steuern; **dadurch gekennzeichnet, dass**
in einem Fall, in dem ein von der Druckerfassungseinheit (69) erfasster Druck niedriger als ein vorbestimmter Druck ist, die Steuereinheit (90) das Zufuhrventil (97) und das Abfuhrventil (99) schließt und das Verbindungsventil (98) öffnet, und in einem Fall, in dem der von der Druckerfassungseinheit (69) erfasste Druck gleich oder höher als der vorbestimmte Druck ist, die Steuereinheit (90) das Zufuhrventil (97) und das Abfuhrventil (99) öffnet und das Verbindungsventil (98) schließt.

6. Dehydratisierungsvorrichtung (60) nach Anspruch 5, wobei der erste vorbestimmte Druck ein Druck ist, der fähig ist zu veranlassen, dass das Dehydratisierungslösungsmittel von der Absorptionseinheit (62) zu der Destilliergeräteinheit (72) über die Transportleitung (L₂₁, L₂₂, L₂₃) transportiert wird.

7. Dehydratisierungs-Kompressions-System (10, 10A, 10B), umfassend:
die Dehydratisierungsvorrichtung (60) nach einem der Ansprüche 1 bis 6;
einen ersten Kompressor (50-1, 50-2), der konfiguriert ist, um feuchtigkeitshaltiges Prozessgas zu komprimieren; und
einen zweiten Kompressor (50-3, 50-4), zu dem das Prozessgas mit entzogener Feuchtigkeit von der Dehydratisierungsvorrichtung (60) zugeführt wird und der konfiguriert ist, um das Prozessgas zu komprimieren.

8. CO₂-Rückgewinnungssystem, umfassend:
einen CO₂-Inkontaktbringer (22), der konfiguriert ist, um, durch Inkontakbringen von CO₂-enthaltendem Abgas mit CO₂-absorbierender Flüssigkeit, das CO₂ in dem Abgas zu entfernen;
eine Regenerationssäule (30) für absorbierende Flüssigkeit, die konfiguriert ist, um die CO₂-absorbierende Flüssigkeit, die das CO₂ an dem CO₂-Inkontaktbringer (22) absorbiert hat, zu veranlassen, das CO₂ freizusetzen; und
das Dehydratisierungs-Kompressions-System (60) nach Anspruch 7, das konfiguriert ist, um das an der Regenerationssäule für absorbierende Flüssigkeit freigesetzte CO₂ zu komprimieren und die im CO₂ enthaltene Feuchtigkeit zu entfernen.

9. Verfahren zur Steuerung einer Dehydratisierungsvorrichtung, die Feuchtigkeit aus einem Prozessgas entfernt, das die Feuchtigkeit enthält und durch einen Kompressor (50) komprimiert ist,
wobei die Dehydratisierungsvorrichtung (60) einschließt
eine Absorptionseinheit (62), die konfiguriert ist, um die Feuchtigkeit aus dem Prozessgas durch Inkontaktbringen des Prozessgases mit einem Dehydratisierungslösungsmittel, das das Dehydratisierungslösungsmittel veranlasst, die Feuchtigkeit zu absorbieren, zu entfernen,
eine Destilliergeräteinheit (72), die konfiguriert ist, um die Feuchtigkeit aus dem Dehydratisierungslösungsmittel durch Erwärmen des Dehydratisierungslösungsmittels, das die Feuchtigkeit in der Absorptionseinheit (62) absorbiert hat, abzutrennen,
eine Transportleitung (L₂₁, L₂₂, L₂₃), die konfiguriert ist, um das Dehydratisierungslösungsmittel von der Absorptionseinheit (62) zu der Destilliergeräteinheit (72) zu transportieren,
eine Beförderungspumpe (73), die in der Transportleitung (L₂₁, L₂₂, L₂₃) angeordnet ist und die konfiguriert ist, um das von der Absorptionseinheit (62) beförderte Dehydratisierungslösungsmittel einzusaugen und das Dehydratisierungslösungsmittel in Richtung der Destilliergeräteinheit (72) auszustoßen,
eine erste Umgehungsleitung (L₂₅), die die Transportleitung (L₂₁, L₂₂, L₂₃) stromaufwärts der Beförderungspumpe (73) und die Transportleitung (L₂₁, L₂₂, L₂₃) stromabwärts der Beförderungspumpe (73) verbindet, und
ein erstes Ein-Aus-Ventil (75), das in der ersten Umgehungsleitung (L₂₅) angeordnet ist,
**dadurch gekennzeichnet, dass** das Verfahren umfasst:
einen ersten Druckerfassungsschritt (S108) des Erfassens eines Drucks innerhalb der Absorptionseinheit (62);
einen ersten Steuerungsschritt (S105, S106) des Schließens des ersten Ein-Aus-Ventils (75) und des Veranlassens des Betriebs der Beförderungspumpe (73) in einem Fall, in dem ein in dem ersten Druckerfassungsschritt (S108) erfasster Druck niedriger als ein erster vorbestimmter Druck ist; und
einen zweiten Steuerschritt (S110, S111) des Öffnens des ersten Ein-Aus-Ventils (75) und des Veranlassens des Anhaltens der Beförderungspumpe (73) in einem Fall, in dem der in dem ersten Druckerfassungsschritt (S108) erfasste Druck gleich oder höher als der erste vorbestimmte Druck ist.

10. Verfahren zur Steuerung einer Dehydratisierungsvorrichtung, die Feuchtigkeit aus einem Prozessgas entfernt, das die Feuchtigkeit enthält und durch einen Kompressor komprimiert ist,
wobei die Dehydratisierungsvorrichtung (60) einschließt
eine Absorptionseinheit (62), die konfiguriert ist, um die Feuchtigkeit aus dem Prozessgas durch Inkontaktbringen des Prozessgases mit einem Dehydratisierungslösungsmittel, das das Dehydratisierungslösungsmittel veranlasst, die Feuchtigkeit zu absorbieren, zu entfernen,
eine Druckerhöhungseinheit (67), die konfiguriert ist, um der Absorptionseinheit (62) Gas mit erhöhtem Druck zuzuführen,
eine Destilliergeräteinheit (72), die konfiguriert ist, um die Feuchtigkeit aus dem Dehydratisierungslösungsmittel durch Erwärmen des Dehydratisierungslösungsmittels, das die Feuchtigkeit in der Absorptionseinheit (62) absorbiert hat, abzutrennen,
eine Zufuhrleitung (L₁₁), die konfiguriert ist, um das vom Kompressor (50) komprimierte Prozessgas an die Absorptionseinheit (62) zuzuführen,
eine Transportleitung (L₂₁, L₂₂, L₂₃), die konfiguriert ist, um das Dehydratisierungslösungsmittel von der Absorptionseinheit (62) zu der Destilliergeräteinheit (72) zu transportieren,
eine Abfuhrleitung (L₁₂), die konfiguriert ist, um das Prozessgas, aus dem die Feuchtigkeit in der Absorptionseinheit (62) entfernt wurde, abzuführen,
eine Verbindungsleitung (L₁₃), die die Zufuhrleitung (L₁₁) und die Abfuhrleitung (L₁₂) verbindet,
ein Zufuhrventil (97), das in der Zufuhrleitung (L₁₁) stromabwärts von einer Verbindungsposition mit der Verbindungsleitung (L₁₃) angeordnet ist,
ein Verbindungsventil (98), das in der Verbindungsleitung (L₁₃) angeordnet ist, und
ein Abfuhrventil (99), das in der Abfuhrleitung (L₁₂) angeordnet ist,
**dadurch gekennzeichnet, dass** das Verfahren umfasst:
einen Druckerfassungsschritt (S315) des Erfassens eines Drucks innerhalb der Absorptionseinheit (62);
einen ersten Steuerungsschritt (S318, S319) des Schließens des Zufuhrventils (97) und des Abfuhrventils (99) und des Öffnens des Verbindungsventils (98) in einem Fall, in dem ein in dem Druckerfassungsschritt (S315) erfasster Druck niedriger als ein vorbestimmter Druck ist; und
einen zweiten Steuerungsschritt (S313, S314) des Öffnens des Zufuhrventils (97) und des Abfuhrventils (99) und des Schließens des Verbindungsventils (98) in einem Fall, in dem der in dem Druckerfassungsschritt (S315) erfasste Druck gleich oder höher als der vorbestimmte Druck ist.

## Revendications

1. Dispositif de déshydratation (60) qui élimine l'humidité d'un gaz de traitement qui contient l'humidité et est comprimé par un compresseur (50), le dispositif de déshydratation (60) comprenant :
une unité d'absorption (62) configurée pour éliminer l'humidité du gaz de traitement en amenant le gaz de traitement en contact avec un solvant de déshydratation pour amener le solvant de déshydratation à absorber l'humidité ;
une première unité de détection de pression (69) configurée pour détecter une pression à l'intérieur de l'unité d'absorption (62) ;
une unité de distillation (72) configurée pour séparer l'humidité du solvant de déshydratation en chauffant le solvant de déshydratation qui a absorbé l'humidité au niveau de l'unité d'absorption (62) ;
une conduite de transport (L₂₁, L₂₂, L₂₃) configurée pour transporter le solvant de déshydratation de l'unité d'absorption (62) à l'unité de distillation (72) ;
une pompe d'apport (73) disposée dans la conduite de transport (L₂₁, L₂₂, L₂₃) et configurée pour aspirer le solvant de déshydratation apporté à partir de l'unité d'absorption (62) et éjecter le solvant de déshydratation vers l'unité de distillation (72) ;
une première conduite de dérivation (L₂₆) couplant la conduite de transport (L₂₁, L₂₂, L₂₃) en amont de la pompe d'apport (73) et la conduite de transport (L₂₁, L₂₂, L₂₃) en aval de la pompe d'apport (73) ;
une première vanne de marche-arrêt (75) disposée dans la première conduite de dérivation (L₂₅) ; et
une unité de commande (90) configurée pour commander la pompe d'apport (73) et la première vanne de marche-arrêt (75) ; **caractérisé en ce que**
dans un cas où une pression détectée par la première unité de détection de pression (69) est inférieure à une première pression prédéterminée, l'unité de commande (90) ferme la première vanne de marche-arrêt (75) et amène la pompe d'apport (73) à fonctionner, et dans un cas où la pression détectée par la première unité de détection de pression (69) est supérieure ou égale à la première pression prédéterminée, l'unité de commande (90) ouvre la première vanne de marche-arrêt (75) et amène la pompe d'apport (73) à s'arrêter.

2. Dispositif de déshydratation (60) selon la revendication 1, dans lequel la première pression prédéterminée est une pression capable d'amener le solvant de déshydratation à être transporté de l'unité d'absorption (62) à l'unité de distillation (72) par l'intermédiaire de la conduite de transport (L₂₁, L₂₂, L₂₃).

3. Dispositif de déshydratation (60) selon la revendication 1, comprenant en outre :
une unité d'évaporation (74) disposée dans la conduite de transport (L₂₁, L₂₂, L₂₃) et configurée pour décomprimer le solvant de déshydratation pour évaporer le gaz de traitement absorbé par le solvant de déshydratation ;
une deuxième conduite de dérivation (L₂₆) couplant la conduite de transport (L₂₁, L₂₂, L₂₃) en amont de l'unité d'évaporation (74) et la conduite de transport (L₂₁, L₂₂, L₂₃) en aval de l'unité d'évaporation (74) ; et
une deuxième vanne de marche-arrêt (76) disposée dans la deuxième conduite de dérivation (L₂₆) ; dans lequel
dans un cas où la pression détectée par la première unité de détection de pression (69) est inférieure à la première pression prédéterminée, l'unité de commande (90) ouvre la deuxième vanne de marche-arrêt (L₂₆), et dans un cas où la pression détectée par la première unité de détection de pression (69) est supérieure ou égale à la première pression prédéterminée, l'unité de commande (90) ferme la deuxième vanne de marche-arrêt (L₂₆).

4. Dispositif de déshydratation (60) selon la revendication 3, dans lequel la première pression prédéterminée est une pression capable d'amener le solvant de déshydratation à être transporté de l'unité d'absorption (62) à l'unité de distillation (72) par l'intermédiaire de la conduite de transport (L₂₁, L₂₂, L₂₃).

5. Dispositif de déshydratation (60) qui élimine l'humidité d'un gaz de traitement qui contient l'humidité et est comprimé par un compresseur (50), le dispositif de déshydratation (60) comprenant :
une unité d'absorption (62) configurée pour éliminer l'humidité du gaz de traitement en amenant le gaz de traitement en contact avec un solvant de déshydratation pour amener le solvant de déshydratation à absorber l'humidité ;
une unité de pressurisation (67) configurée pour alimenter l'unité d'absorption (62) en gaz de pressurisation ;
une unité de détection de pression (69) configurée pour détecter une pression à l'intérieur de l'unité d'absorption (62) ;
une unité de distillation (72) configurée pour séparer l'humidité du solvant de déshydratation en chauffant le solvant de déshydratation qui a absorbé l'humidité au niveau de l'unité d'absorption (62) ;
une ligne d'alimentation (L₁₁) configurée pour alimenter l'unité d'absorption (62) en gaz de traitement comprimé par le compresseur (50) ;
une conduite de transport (L₂₁, L₂₂, L₂₃) configurée pour transporter le solvant de déshydratation de l'unité d'absorption (62) à l'unité de distillation (72) ;
une conduite d'évacuation (L₁₂) configurée pour évacuer le gaz de traitement dont l'humidité a été éliminée au niveau de l'unité d'absorption (62) ;
une conduite de couplage (L₁₃) couplant la ligne d'alimentation (L₁₁) et la conduite d'évacuation (L₁₂) ;
une vanne d'alimentation (97) disposée dans la ligne d'alimentation (L₁₁) en aval d'une position de couplage avec la conduite de couplage (L₁₃) ;
une vanne de couplage (98) disposée dans la conduite de couplage (L₁₃) ;
une vanne d'évacuation (99) disposée dans la conduite d'évacuation (L₁₂) ; et
une unité de commande (90) configurée pour commander la vanne d'alimentation (97), la vanne de couplage (98), et la vanne d'évacuation (99) ; **caractérisé en ce que**
dans un cas où une pression détectée par l'unité de détection de pression (69) est inférieure à une pression prédéterminée, l'unité de commande (90) ferme la vanne d'alimentation (97) et la vanne d'évacuation (99) et ouvre la vanne de couplage (98), et dans un cas où la pression détectée par l'unité de détection de pression (69) est supérieure ou égale à la pression prédéterminée, l'unité de commande (90) ouvre la vanne d'alimentation (97) et la vanne d'évacuation (99) et ferme la vanne de couplage (98).

6. Dispositif de déshydratation (60) selon la revendication 5, dans lequel la pression prédéterminée est une pression capable d'amener le solvant de déshydratation à être transporté de l'unité d'absorption (62) à l'unité de distillation (72) par l'intermédiaire de la conduite de transport (L₂₁, L₂₂, L₂₃).

7. Système de déshydratation-compression (10, 10A, 10B) comprenant :
le dispositif de déshydratation (60) selon l'une quelconque des revendications 1 à 6 ;
un premier compresseur (50-1, 50-2) configuré pour comprimer un gaz de traitement contenant de l'humidité ; et
un deuxième compresseur (50-3, 50-4) alimenté en gaz de traitement dont l'humidité est éliminée provenant du dispositif de déshydratation (60) et qui est configuré pour comprimer le gaz de traitement.

8. Système de récupération de CO₂ comprenant :
un contacteur de CO₂ (22) configuré pour éliminer, en amenant un gaz d'échappement contenant du CO₂ en contact avec un liquide absorbant le CO₂, le CO₂ dans le gaz d'échappement ;
une colonne de régénération de liquide absorbant (30) configurée pour amener le liquide absorbant le CO₂ qui a absorbé le CO₂ au niveau du contacteur de CO₂ (22) à libérer le CO₂ ; et
le système de déshydratation-compression (60) selon la revendication 7, configuré pour comprimer le CO₂ libéré au niveau de la colonne de régénération de liquide absorbant et éliminer l'humidité contenue dans le CO₂.

9. Méthode de commande de dispositif de déshydratation qui élimine l'humidité d'un gaz de traitement qui contient l'humidité et est comprimé par un compresseur (50),
le dispositif de déshydratation (60) comportant
une unité d'absorption (62) configurée pour éliminer l'humidité du gaz de traitement en amenant le gaz de traitement en contact avec un solvant de déshydratation pour amener le solvant de déshydratation à absorber l'humidité,
une unité de distillation (72) configurée pour séparer l'humidité du solvant de déshydratation en chauffant le solvant de déshydratation qui a absorbé l'humidité au niveau de l'unité d'absorption (62),
une conduite de transport (L₂₁, L₂₂, L₂₃) configurée pour transporter le solvant de déshydratation de l'unité d'absorption (62) à l'unité de distillation (72),
une pompe d'apport (73) disposée dans la conduite de transport (L₂₁, L₂₂, L₂₃) et configurée pour aspirer le solvant de déshydratation apporté à partir de l'unité d'absorption (62) et éjecter le solvant de déshydratation vers l'unité de distillation (72),
une première conduite de dérivation (L₂₅) couplant la conduite de transport (L₂₁, L₂₂, L₂₃) en amont de la pompe d'apport (73) et la conduite de transport (L₂₁, L₂₂, L₂₃) en aval de la pompe d'apport (73), et
une première vanne de marche-arrêt (75) disposée dans la première conduite de dérivation (L₂₅),
**caractérisée en ce que** la méthode comprenant :
une première étape de détection de pression (S108) consistant à détecter une pression à l'intérieur de l'unité d'absorption (62) ;
une première étape de commande (S105,S106) consistant à fermer la première vanne de marche-arrêt (75) et à amener la pompe d'apport (73) à fonctionner dans un cas où une pression détectée à la première étape de détection de pression (S108) est inférieure à une première pression prédéterminée ; et
une deuxième étape de commande (S110,S111) consistant à ouvrir la première vanne de marche-arrêt (75) et à amener la pompe d'apport (73) à s'arrêter dans un cas où la pression détectée à la première étape de détection de pression (S108) est supérieure ou égale à la première pression prédéterminée.

10. Méthode de commande de dispositif de déshydratation qui élimine l'humidité d'un gaz de traitement qui contient l'humidité et est comprimé par un compresseur,
le dispositif de déshydratation (60) comportant
une unité d'absorption (62) configurée pour éliminer l'humidité du gaz de traitement en amenant le gaz de traitement en contact avec un solvant de déshydratation pour amener le solvant de déshydratation à absorber l'humidité,
une unité de pressurisation (67) configurée pour alimenter l'unité d'absorption (62) en un gaz de pressurisation,
une unité de distillation (72) configurée pour séparer l'humidité du solvant de déshydratation en chauffant le solvant de déshydratation qui a absorbé l'humidité au niveau de l'unité d'absorption (62),
une ligne d'alimentation (L₁₁) configurée pour alimenter l'unité d'absorption (62) en gaz de traitement comprimé par le compresseur (50),
une conduite de transport (L₂₁, L₂₂, L₂₃) configurée pour transporter le solvant de déshydratation de l'unité d'absorption (62) à l'unité de distillation (72),
une conduite d'évacuation (L₁₂) configurée pour évacuer le gaz de traitement dont l'humidité a été éliminée au niveau de l'unité d'absorption (62),
une conduite de couplage (L₁₃) couplant la ligne d'alimentation (L₁₁) et la conduite d'évacuation (L₁₂),
une vanne d'alimentation (97) disposée dans la ligne d'alimentation (L₁₁) en aval d'une position de couplage avec la conduite de couplage (L₁₃),
une vanne de couplage (98) disposée dans la conduite de couplage (L₁₃), et
une vanne d'évacuation (99) disposée dans la conduite d'évacuation (L₁₂),
**caractérisée en ce que** la méthode comprenant :
une étape de détection de pression (S315) consistant à détecter une pression à l'intérieur de l'unité d'absorption (62) ;
une première étape de commande (S318, S319) consistant à fermer la vanne d'alimentation (97) et la vanne d'évacuation (99) et à ouvrir la vanne de couplage (98) dans un cas où une pression détectée à l'étape de détection de pression (S315) est inférieure à une pression prédéterminée ; et
une deuxième étape de commande (S313, S314) consistant à ouvrir la vanne d'alimentation (97) et la vanne d'évacuation (99) et à fermer la vanne de couplage (98) dans un cas où la pression détectée à l'étape de détection de pression (S315) est supérieure ou égale à la pression prédéterminée.
